# EUROPEAN PATENT SPECIFICATION

(11) **EP 3 519 505 B1**
(45) Date of publication and mention of the grant of the patent: **08.07.2020**
(21) Application number: 18782427.1
(22) Date of filing: 03.10.2018
(51) Int. Cl.: C08L 91/06, B01F 3/12, B01F 17/00, B05D 3/10, B05D 5/08, B27N 1/00, B27N 3/00, B27N 3/04, B27N 7/00, D21H 21/00, D21H 23/22

(54) **VEGETABLE OIL-BASED O/W FORMULATIONS OBTAINABLE FROM RENEWABLE SOURCES FOR INCREASING HYDROPHOBICITY OF WOOD-DERIVED BOARDS AND FIBREGLASS OR ROCK WOOL INSULATIONS**
PFLANZENÖLBASIERTE ÖL-IN-WASSER-FORMULIERUNGEN AUS NACHWACHSENDEN ROHSTOFFEN ZUR ERHÖHUNG DER HYDROPHOBIE VON HOLZWERKSTOFFPLATTEN, GLASSFASERISOLIERUNGEN ODER STEINWOLLEPLATTEN
FORMULATIONS H/E À BASE D'HUILE VÉGÉTALE ISSUES DE MATIÈRES RENOUVABLES POUR AUGMENTER L'HYDROPHOBICITÉ DE PLAQUES DE MATÉRIAUX DÉRIVÉ DU BOIS, D'ISOLATION DE FIBRE EN VERRE OU DE PANNEAUX ISOLANTS EN LAINE

(30) Priority: 03.10.2017 EP 17382658
(43) Date of publication of application: 07.08.2019
(73) Proprietor: Foresa, Industrias Químicas Del Noroeste, S.A.U., 36650 Caldas de Reis (Pontevedra) (ES)
(72) Inventor: CASAS PÉREZ, José Manuel, 36650 Caldas de Reis (Pontevedra) (ES); SÁNCHEZ GARCÍA, Antonio, 36650 Caldas de Reis (Pontevedra) (ES)
(74) Representative: Balder IP Law, S.L.
(86) International application number: PCT/EP2018/076934
(87) International publication number: WO 2019/068779

(56) References cited:
- WO-A1-2010/054467
- US-A- 3 636 199
- US-A- 5 112 652
- US-A1- 2006 289 138
- US-B2- 7 776 928

## Description

### FIELD OF THE INVENTION

The present invention relates to vegetable oil-based O/W formulations, an environmentally friendly alternative to formulations based on mineral oil derived waxes or synthetic waxes, such as e.g. paraffin, which are obtainable from renewable resources instead of non-renewable resources; they comprise an O/W suspension or emulsion, that contains hydrogenated or partially hydrogenated palm oil and soy oil, as well as surfactants and water, and are useful for increasing the hydrophobicity of wood-derived boards and fibreglass or rock wool insulations. The formulations are useful for preparing hidrofugant formulations, i.e. waterproofing formulations, and for improving the release of the boards from the molds used during manufacture, i.e. for preparing releasing formulations; the formulations are kinetically stable, and may be used, for example, but not limited to, in the manufacture of wood derived boards, fibreboards (including MDF and HDF boards, i.e. medium-density and high-density fibreboards), particleboards, chip boards, oriented strand boards, plywood, paperboards, and boards or insulations made from fibreglass or rock wool. The invention also refers to the materials treated or manufactured with the formulations of the invention, for example the panels and boards obtained by the use of said formulations. As the mentioned boards and insulations are generally manufactured by using formaldehyde-derived resins to bind the natural and/or synthetic fibres therein, the invention is also related to vegetable oil-based O/W formulations comprising formaldehyde scavengers and/or catalysts for the hardening of formaldehyde-derived resins, so that, simultaneously to waterproofing the manufactured boards or insulations, the formaldehyde emission of the boards is reduced, and/or the hardening of the formaldehyde-derived resins is accelerated, conveniently without the need of adding any further formaldehyde scavengers and/or any further catalysts for hardening formaldehyde-derived resins during the manufacture of the boards or insulations.

### BACKGROUND OF THE INVENTION

### Use of paraffin wax

A chipboard panel is understood as any type of panel made from small pieces of wood, such as chips, particles or fibers in which a binder is used in the manufacture thereof. The addition of paraffin wax plays a key role in this process given that, in the form of a suspension, it greatly improves the effectiveness of this coating due to its inherent hydrophobic nature, thus helping the panel to avoid water absorption, minimising the loss of physical and mechanical properties and improving the dimensional stability of the wood, reducing the swelling of the boards.

The wax-based suspensions derived from petroleum are used in many industrial applications, for example, to coat cellulose fibres, products such as paper and wood, mainly to provide moisture resistance, etc.

The use of waxes goes back to ancient times. For centuries, those most often used were animal-, insect- or vegetable-based waxes (whale oil, beeswax, carnauba wax); nowadays their use is significantly low and it is aimed at uses such as fuel (candles), artistic (paints and moulding), cosmetics or medicinal (waxing and creams). Currently, emulsified waxes have been replaced by those of mineral origin (petroleum).

There are many applications of paraffin wax due to its versatility, it being possible to give as examples such varied fields and applications as the manufacture of candles, cheese coatings, matches, paper and cardboard, hot melt adhesives, petroleum jelly, paraffin suspensions (often also called paraffin emulsions) for boards, rubber protection, floor waxes, filling compound for telecommunications cables, models and figurine reproductions, dentist and pathological anatomy moulds, polishers, bodywork protection, textile industry, chewing gum, explosives and powders, agricultural grafts, releasing agents, etc.

To date, the use of liquid paraffin or petrochemical-based paraffin suspensions is described in all the manufacturing processes of chipboard panels, both with particles and fibres. The emulsification techniques applied until now in the wood-derived panel manufacturing sector describe the use of petroleum-derived waxes and synthetic waxes for their incorporation into suspensions, but do not mention the use of vegetable-derived waxes in suspensions.

Although often denominated paraffin emulsions, even commercially, in fact they are paraffin suspensions, as the oily particles in the water phase of the O/W suspensions, at normal temperature and pressure conditions, are in the solid state. (for further information, see e.g. Paul Becher. "EMULSIONS, theory and practice". Editorial Blume. 1972; Kozo Shinoda and Stig Friberg, "Emulsions and Solubilization". John Wiley&Sons. 1986; Alton E. Bailey. "Industrial oil and fat products". Editorial REVERTÉ, SA. 1984; Ankur Gupta et al., "Nanoemulsions: formation, properties and applications". Soft Matter, 2016, 12, 2826 - 2841; Paqui Izquierdo et al., "Phase Behaviour and Nano-emulsion formation by the Phase Inversion Temperature Method", Langmuir 2004, 20, 6594-6598; R. Mujica Garai et al., "Study on the Effect of Raw Material composition on Water-Repellent capacity of Paraffin Wax Emulsions on Wood", Journal of dispersion Science and Technology, 26:9-18,2005; Mújila-Garai, R. et al., "Stabilization of Paraffin Emulsions Used in the Manufacture of Chipboard Panels by Liquid Crystalline Phases". Journal of Dispersion Science and Technology, 28:6, 829-836, 2007; P. Izquierdo et al., "Formation and Stability of Nano-Emulsions Prepared Using the Phase Inversion Temperature Method", Langmuir 2002,18,26-30; Weirong Liu et al., "Formation and stability of paraffin oil-in-water nano-emulsions prepared by the emulsion inversion point method". Journal of Colloid and Interface Science 303 (2006) 557-563)

### Vegetable-based O/W suspensions

It is the object of the present invention to obtain formulations comprising O/W suspensions by using a vegetable-based product as the main raw material, i.e. suspensions based on suspending vegetable oils, such as palm and soy oil, in a water phase.

These raw materials help reduce the dependency on mineral oil (petroleum), reduce the carbon footprint and avoid the price swings of raw materials indexed to oil prices. Mineral oil is a non-renewable resource, whereas vegetable oil is a renewable resource; therefore vegetable oil based formulations are environmentally friendly.

Thus far no vegetable-based emulsions have been developed which are viable from the point of view of the production of chipboard and MDF panels, which may compete both in terms of cost and accessibility of raw materials, as well as final product results, with traditional products based on paraffin.

Nowadays, the increase in the production of palm and soybean crops due to the use of vegetable oils as substitutes for mineral oils has caused a decrease in the cost of raw materials, which makes it even more interesting to develop emulsions based on such vegetal oils.

Different vegetable wax emulsions have been described in the bibliography.

For example, US7.267.743B2 (US2006/0289138A1) and US7.776.928B2 (US2007/0068642A1) are related to wax emulsion coating applications, which comprise a vegetable wax which necessarily has a high hydrogenation level, i.e. a high saturation, with namely a iodine value of less than 10 and between 2 and 5, respectively. Although a variety of hydrogenated waxes are described therein, including castor, soybean, palm, corn, cottonseed, rape, canola, sunflower, palm kernel, coconut, crambe, linseed and peanut, only soybean and a mixture of soybean and castor are exemplified. The resulting emulsions, when viewed on a glass slide, are said to appear uniform with only minor amounts of wax particles observed; although it is said that the emulsions are stable, the presence of wax particles, even in minor amounts, is a clear sign of lack of kinetical stability of the emulsions; indeed, in Example 8 of US7.776.928B2, stability is defined as the property of the emulsion not to separate into its component phases over a specified time period, but the presence of wax particles reveals the opposite, even if present in minor amounts. The wax emulsions are mainly used for coating of paper or paperboard.

Other described emulsions comprise the use of toxic or currently banned surfactants, such as ethoxylated nonylphenols (US 7776928 B2). There are also emulsions with commercially unviable low concentrations or with much higher costs than traditional paraffins, which invalidates them for the industrial production of chipboard panels.

WO2010/054467 refers to stable emulsions for use as a formaldehyde scavenger, the emulsions comprising a wax and a formaldehyde scavenger. Although it is said that the wax may be a vegetable derived wax or a natural oil, the inventors have not prepared any emulsions based on vegetable derived waxes or natural oils, but only emulsions based on paraffin, which is the state-of-the-art standard. It is not shown that it is possible to prepare such stable vegetable oil derived emulsions, and even the less how to prepare such stable vegetable oil derived emulsions, nor their performance in the manufacture of boards or insulations.

### Paraffin

Paraffins are saturated hydrocarbons arising from the vacuum distillation of mineral oil and the subsequent refining stages to which the fractions or cuts are subjected in order to obtain lubricating oils. A vacuum distillate of paraffinic crude has a composition with a significant proportion, around 15% by weight, of paraffins, which are solid at room temperature and must therefore be separated in order for the lubricating oils to have freezing points equal to or lower than -10°C.

Linear carbon chains with lengths between C20 and C60, accompanied by chains that have C1-C6 branches and saturated cycles with 5 or 6 carbon atoms, are mainly predominant in paraffin waxes.

Depending on the structural shape of the chain, there are two types of paraffins:
- Normal or linear chain paraffins (n-paraffins). They are saturated alkanes with a practically linear molecular structure. Its chemical formula is Cn H2n+2, wherein n>20, and the molecular weights thereof are comprised between 280 and 840.
- Isoparaffins or branched-chain paraffins. These are saturated hydrocarbons (alkanes), the structure of which mainly contains branched chains. These branches are mainly made up of linear radicals, C1-C6, or cycles with 5 or 6 carbons.

Paraffin classification is very varied because it is carried out depending on different properties:
- Origin.
- Crystalline nature (degree of crystallinity, depending on the hydrocarbons present).
- Oil content (depending on the production process or degree of de-oiling).
- Degree of refining (depending on the final purification process, for the same oil content).

Paraffins, as described, form long molecular chains. These chains are more or less flexible and mobile; the grid they establish is characterised by the statistical variation of their dimensions and orientation, it being impossible to have the typical crystalline structure, which consists of the repetition of a unit referred to as a cell. In any case, it is common to find regions where the chains are in more or less parallel arrangements and packed into crystals, accompanied by amorphous regions.

### Paraffin suspensions

As indicated above, paraffins are solid at room temperature; their use as waterproofing or releasing agents involves a prior melting process with the resulting energy costs. The objective pursued with the paraffin wax suspensions is to obtain liquid paraffins at room temperature. Given that paraffins are immiscible with water, the only way of combining both elements is by formulating water-based suspensions.

Suspensions are produced by adding emulsifier additives that form micelles in order to keep the thus stabilised suspensions both stable and liquid. These pre-emulsions are passed through a homogenizer at 200-300 atm (colloid mills or homogenisers) in order to achieve microscopic particle sizes, generally smaller than a micron, that maintain the stability of the emulsion with a very narrow particle size distribution.

These paraffin suspensions are easy to transport in liquid state at room temperature and enable a perfect dosage in industrial facilities; its main use is as a waterproofing agent in the manufacture of chipboard and MDF (medium density fibreboard) panels. If these panels do not incorporate a waterproofing additive, huge absorption and swelling problems arise as a result of the ambient humidity due to the fibres or shavings of the wood that make up the panel. Aminoplast-type resins commonly used in the manufacture of panels do not provide sufficient waterproofing on their own.

In the past, large panel manufacturing industries started to use melted paraffins as waterproofing systems. Given the high energy and storage cost that this requires, the paraffin suspensions seem to be a suitable alternative, hence its important rise over the last few years. The paraffin wax dosed in panel manufacturing in the form of a suspension or emulsion, forms an anti-humidity barrier, both on the surface and inside. In this way, these panels can even be used as exterior cladding, without causing the swelling phenomena that would deform the panel.

The suspensions used in this field must have the following properties:
- Good compatibility with aminoplastic resins.
- Good water barrier behaviour, waterproofing agent.
- Good mechanical stability.

### Palm Stearin and Hydrogenated Palm Oil

Stearin is obtained by separating the Olein in the raw material, which is the palm oil, whereas the hydrogenated fats are obtained through different degrees of hydrogenation of the raw material, which is the palm oil, transforming the double bonds (unsaturated) into single bonds (saturated).

The preparation of suspensions, dispersions or emulsions based on palm stearin and hydrogenated palm oil has technological difficulties or risks such as:
1. Little stability of dispersions, leading to separation into phases.
2. High viscosities that hinder the industrial application thereof.
3. Concentration of waxes in the stable suspensions is too low, around 30%.
4. Strong tendency to form a cream, which develops in a matter of hours.
5. Waterproofing capacity in some cases is lower with respect to state-of-the-art paraffin emulsions.

Waxes are generally considered to be mixtures of esters with high molecular masses formed by fatty acids and monohydroxylated alcohol, wherein n and m represent the 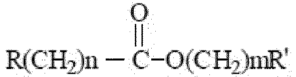 number of times the CH₂ group is repeated. As such, the most frequent values are: n = 8-18 and m = 16-36.

### (general structure of a wax)

Glycerides are made up of fatty acids with a high molecular mass and trihydroxylated alcohols such as propanetriol, glycerol or glycerine.

Glycerides can have an esterified hydroxyl group, called monoglyceride, diglyceride when they have two esterified hydroxyl groups, and triglyceride when three hydroxyl groups were esterified.

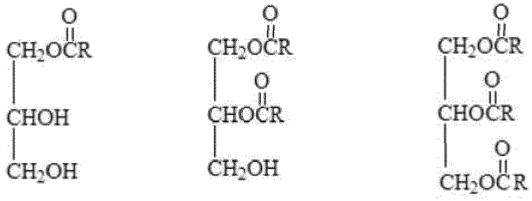

When glycerides have saturated carbon chains, they are referred to as fats, all the carbon atoms exhibit sp3 hybridisation, except the carbon of the functional group (ester), from which it can be deduced that the fatty acids in these structures are saturate chains.

In general, vegetable oils are characterised by the presence of double bonds in the fatty acid chains that form the glyceride structure, and therefore not all the carbon atoms exhibit sp3 hybridisation, a new functionality appears, where the carbon atoms exhibit sp2 hybridisation and different chemical reactivity, and the fatty acids present are not saturated. Note that the saturated fatty acids have a specific packing or order in the triglyceride molecules, which explains why the fats are solid substances, whereas the particular stereochemistry of the fatty acids that make up the oils (unsaturated fatty acids) with geometric isomers, the most abundant being cis isomer, provides a different spatial order, which can be seen in the figures below.

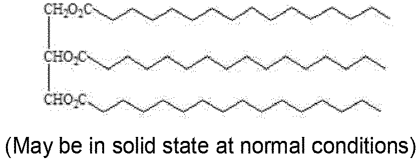

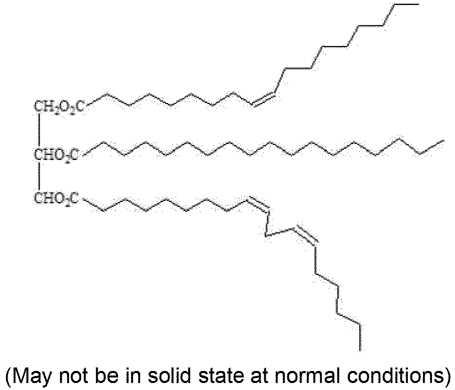

Simple lipids are neutral substances, which are soluble in organic solvents with a low polarity, insoluble in water, with characteristic odours, and their consistency varies from oily liquids to semi-solid to solid substances.

Their insolubility in water is the property that is interesting in order to be used as a waterproofing agent in the manufacture of chipboard and MDF panels. The challenge is to develop an optimal formula of a water-based nanometric oil suspension with a high concentration.

The properties of lipids, such as acidity, degree of saturation and ease of saponification, are related to their chemical structure. These properties may be determined using the following values:
- Iodine value: grams of iodine that are added to 100 g of fat or oil. It measures the level of saturation of the fat or oil.
- Acid value: the value of potassium hydroxide in milligrams required to neutralise 1 g of fat or oil. It is a measurement of the acidity of simple lipids.
- Saponification value: milligrams of potassium hydroxide required to saponify 1 g of fat or oil.

The acids present in the structure of simple lipids are monocarboxylic acids, having a carboxyl group, and chains that vary in length from 4 to 40 carbon atoms, the most abundant being acids with 16 to 18 carbon atoms.

### Manufacture of wood composite boards

The manufacture of wood composite boards such as particleboard, fibreboard (MDF and HDF), chip boards, oriented strand boards and the like generally first comprises combining wood chips, fibres or particles, optionally in combination with synthetic fibres, and an adhesive. The mixture is then heated under pressure to cure the adhesive and to form the desired board. Formaldehyde based resins, such as phenol-formaldehyde (PF) resins, urea-formaldehyde (UF) resins and melamine-urea-formaldehyde (MUF) resins are typical adhesives or binders used in the manufacture of such panels.

In order to impart hydrophobing characteristics to wood composite boards, it is known in the State of the Art to include a wax emulsion into the board manufacturing process. Thus, once the board is made, the wax provides hydrophobic properties thereto and serves to repel water from being absorbed, thereby preventing deterioration of the board.

Wood composite boards, as well as fibreglass or rock wool insulations, manufactured with formaldehyde based adhesives, are known to result in formaldehyde emissions, both during their manufacture and also later, over time. It is generally known that formaldehyde is a strong irritant and an allergenic agent, and is also classified as a carcinogen.

### Manufacture of fiberglass insulations and rock wool insulations

The manufacture of fiberglass and rock wool insulation products generally comprises a step of manufacture of the rock wool and fiberglass themselves, which can be performed by different procedures, for example according to the techniques known in the state of the art as rotary process (internal centrifuge), cascade process (external centrifuge), and flame attenuation process (pot & marble).

To ensure the assembly and adhesion of the fibers, an adhesive resin, generally a thermosetting resin, is projected onto the fibers (glass fiber or rock wool), or mixed with the fibers. The mixture of fibers and resin is subjected to a thermal treatment, at a temperature generally higher than 100 ° C, in order to effect the polycondensation of the resin and thus obtain a thermal and/or acoustic insulation product. Commonly used adhesive compositions are resins derived from formaldehyde, similar to those used in the manufacture of wood derived boards or wood composite boards. During the manufacture further additives may be added to the mixture of fibers and adhesive, such as for example catalysts for crosslinking the resin or waterproofing emulsions (typically paraffin-based).

That is, the manufacture of fiberglass insulations and rock wool insulations has many similarities to the manufacture of wood derived boards or wood composite boards.

### Formaldehyde

Formaldehyde is a monomer, which is used to polymerize with urea, melamine, phenol to form aminoplast resins. Formaldehyde is under discussion as an indoor air pollutant since the 1960s (O. Wittmann (1962), Holz Roh- Werkst., 20, 221 - 224), when the release of formaldehyde from particleboard during use was documented. Adverse health effects from indoor exposure to formaldehyde, especially irritation of the eyes and upper airways, were first reported in the mid-1960s. Formaldehyde emissions from materials bonded with urea formaldehyde resin were soon identified as the cause of the complaints. As a consequence, a guideline value of 0.1 ppm was already proposed in 1977 by the former German Federal Agency of Health to limit human exposure in dwellings. Criteria for the limitation and regulation of formaldehyde emissions from wood-based materials were established in 1981 in Germany and Denmark. Other countries followed and issued regulations in the mid 1980ies. Formaldehyde was identified as one of the priority indoor air pollutants (Spengler J.D. et al. (1983). Science, 221(4605), 9-17). In parallel, the first studies on the carcinogenicity of formaldehyde triggered an avalanche of scientific work.

REACH (Registration, Evaluation, Authorization and Restriction of Chemicals) entered into force in 2007. It is the main framework for chemical regulation in the European Union and adopted to improve the protection of human health and the environment from the risks that can be posed by chemicals. REACH not only applies to those chemicals used in industrial processes but also to chemicals in products for intended use at the customers site, for example building materials, textiles, consumer products and other appliances.

The European Chemicals Agency requests the provision of a Chemical Safety Report (CSR) for products manufactured using formaldehyde, following the "DECISION ON SUBSTANCE EVALUATION PURSUANT TO ARTICLE 46(1) OF REGULATION (EC) NO 1907/2006 for formaldehyde, CAS No 50-00-0 (EC No 200-001-8)".

The International Agency for Research on Cancer (IARC) classified formaldehyde as a human carcinogen (Group 1) in 2004. The definition of a Group 1 carcinogen according to IARC is as follows: "*There is enough evidence to conclude that it can cause cancer in humans*". The evaluation is based on information regarding the relationship between nasopharyngeal cancer and leukaemia related to the exposure to formaldehyde (International Agency for Research on Cancer (IARC), 2006)*.* The European Commission classified formaldehyde as a 1B carcinogen and mutagen 2 on June 5th, 2014 in the ordinance EU 605/2014. Category 1B states that the carcinogenic effect has been demonstrated in animal trials and is probable for humans. The reclassification results in a series of consequences depending on national legislation.

For the workplace area the *Scientific Committee on Occupational Exposure Limits (SCOEL)* recommended an 8-hour TWA (time-weighted average) of 0.3 ppm and a STEL (Short Term Exposure Limit) of 0.6 ppm (Scientific Committee on Occupational Exposure Limits (SCOEL), 2015). SCOEL considers formaldehyde as a carcinogen Group C (genotoxic carcinogen with a mode-of action-based threshold). The German MAK Commission (Deutsche Forschungsgemeinschaft (DFG), 2016) also defines a maximum workplace concentration of 0.3 ppm and classifies formaldehyde as a Group 4 carcinogen (substances that cause cancer in humans or animals or that are considered to be carcinogenic for humans and for which a MAK value can be derived). The *German Federal Institute for Occupational Health and Safety (BAuA)* argues that current literature indicates formaldehyde exposure concentrations without adverse effects, which supports the assumption of a threshold concentration and allows the derivation of an occupational limit value (Bundesanstalt für Arbeitsschutz und Arbeitsmedizin (BAuA), 2015)*.*

The WHO confirmed their indoor guideline value for formaldehyde as 0.1 mg/m³ in the year 2010 (World Health Organization, 2010). The WHO assessment was studied thoroughly in a further study and an air quality formaldehyde guideline of 0.1 mg/m³ was considered to be protective against both acute and chronic sensory irritation in the airways in the general population (Nielsen GD et al. (2010), Arch Toxicol., 84, 423-446). Moreover, the same authors state that the formaldehyde WHO guideline value is also considered defendable for prevention of all types of cancer, including lymphohematopoietic malignancies.

In 2016 Germany has adopted the WHO guideline value. The Committee on Indoor Guide Values has outlined the following: "*Based on* a *NOAEC (no observed adverse effect concentration) of 0.63 mg*/*m³ for sensory irritation in humans, a factor of 1 for time extrapolation and a factor of 5 for inter human variability the Committee derives a precautionary indoor air guide value (RW I) of 0.1 mg formaldehyde per cubic meter...In conclusion, the indoor air guide value for formaldehyde is also protective against cancer risk of inhaled formaldehyde" (*Ausschuss für Innenraumrichtwerte, 2016a). The same committee stated that on the basis of the current data there is no clear association between formaldehyde exposure in the indoor environment and asthma in children (Ausschuss für Innenraumrichtwerte, 2016b).

Over the years, a number of national authorities also reassessed their indoor air guideline values (Salthammer et al. (2011), Chemosphere, 82(11), 1507-17) and subsequently intend to agree with the WHO recommendation of 0.1 mg/m³. This harmonization is a pragmatic step as the WHO value is very well assessed and justified. Moreover, the guideline value is also not normally restrictive as formaldehyde conditions in normal living conditions tend to average between 0.02 and 0.04 mg/m³ (Salthammer T et al. (2010), Chem Rev. 110, 2536-2572). According to the currently available state-of-the-art, an orientation to the WHO guideline value of 0.1 mg/m³ would seem sensible, practicable and toxicologically defendable (Salthammer et al (2015), Int J Hyg Environ Health., 218(4),433-6). The argument is supported by Nielsen et al.(2013), Arch Toxicol., 87, 73-98. These authors have evaluated current guideline approaches and come to the conclusion that the WHO guideline has been strengthened.

It is therefore a continuous goal to absorb or "scavenge" the formaldehyde contained in wood composite boards and/or generated during the manufacture of such boards, or during the manufacture of other materials, such as boards or other insulating articles made from rock wool or fibreglass.

### Formaldehyde emissions: test methods

Many organizations have defined the test methods with which the level of formaldehyde emissions has to be determined:
UNE-EN ISO 12460-3:2016: gas analysis method, which is an updated version from Wood-based panels - Determination of formaldehyde release - Part 3: Gas analysis method (ISO 12460-3:2015).

TSCA Title VI provides for quarterly and quality control testing for hardwood plywood, particleboard, and MDF using specified methods developed by ASTM International, among them it is worth noting:
ASTM D5582-00 (Reapproved 2006), Standard Test Method for Determining Formaldehyde Levels from Wood Products Using a Desiccator. This test method describes a small-scale procedure for measuring formaldehyde emissions potential from wood products. The formaldehyde level is determined by collecting airborne formaldehyde in a small distilled water reservoir within a closed desiccator. The quantity of formaldehyde is determined by a chromotropic acid test procedure.

ASTM D6007-02, Standard Test Method for Determining Formaldehyde Concentrations in Air from Wood Products Using a Small-Scale Chamber. This test method measures the formaldehyde concentrations in air from wood products under defined test conditions of temperature and relative humidity. Results obtained from this small-scale chamber test method are intended to be comparable to results obtained testing larger product samples by the large chamber test method for wood products, Test Method E 1333. ASTM E1333-10, Standard Test Method for Determining Formaldehyde Concentrations in Air and Emission Rates from Wood Products Using a Large Chamber. This test method measures the formaldehyde concentration in air and emission rate from wood products containing formaldehyde under conditions designed to simulate product use. The concentration in air and emission rate is determined in a large chamber under specific test conditions of temperature and relative humidity. The general procedures are also intended for testing product combinations at product-loading ratios and at air-exchange rates typical of the indoor environment.

BS EN 120:1992, Wood based panels. Determination of formaldehyde content-Extraction method called the perforator method, English Version. This European standard describes an extraction method, known as the perforator method, for determining the formaldehyde content of unlaminated and uncoated wood-based panels.

UME-EN ISO 12460-3:2016 , Wood-based panels-Determination of formaldehyde release-Part 2: Formaldehyde release by the gas analysis method, English Version. This European standard describes a procedure for determination of accelerated formaldehyde release from wood-based panels.

JIS A 1460:2001 Building boards-Determination of formaldehyde emission-Desiccator method: This method describes a method for testing formaldehyde emissions from construction boards by measuring the concentration of formaldehyde absorbed in distilled or deionized water from samples of a specified surface area placed in a glass desiccator for 24 hours.

### Formaldehyde scavengers

Several compounds useful as formaldehyde scavengers are known in the State of the Art, such as, for example, urea, urea derivatives, urea resins, sodium metabisulphite, ammonium bisulphite.

Document WO 2010/054467 A1 describes emulsions having a high wax content, comprising formaldehyde scavengers; the formaldehyde scavengers are preferably selected from urea, a urea derivative, a urea resin, a urea-formaldehyde resin, a melamine- urea-formaldehyde resin, an ethylene urea compound, carbohydrazide, a natural polyphenol, tannin, lignin, lignosulphonate, or a combination thereof.

Another work (Costa et al. (2013), Wood Sci Technol (2013) 47: 1261-127) studies present the performance of sodium and ammonium bisulphite as formaldehyde scavengers in particleboard and MDF production; however, the use of these type of scavengers causes an excessive loss of mechanical properties in the final product that does not support the current market.

Another way known to reduce formaldehyde emission of boards is the reduction in Formaldehyde/Urea molar ratio; in fact, this has been a strategy adopted in the last decades to decrease formaldehyde emission (Myers GE et al. (1984), For Prod J 34(5):35-41). However, this reduction reduces the reactivity of Urea-Formaldehyde (UF) resins. Currently, reactivity of industrial UF adhesives is near the minimum limit accepted for industrial panel production (urea, a urea derivative, a urea resin, a urea-formaldehyde resin, a melamine- urea-formaldehyde resin, an ethylene urea compound, carbohydrazide, a natural polyphenol^, tannin, lignin, lignosulphonate, or a combination thereof.).

Substitution of UF resins by other formaldehyde-free adhesives does not convince industrial producers, due to their higher price or lower reactivity (Amazio P et al. (2011), J Appl Polym Sci 122(4):2779-2788); Despres A et al. (2010), Eur J Wood Prod 68(1):13-20*;* Tang L et al. (2011), Int J Adhes Adhes 31(6):507-512)*.* In order to increase the degree of cure and reduce free formaldehyde at the end off cure, new catalysts were studied, but reactivity is still too low (Costa et al. (2012), Int Wood Prod J. 4(4), 242-247*;* Gunnells D et al. (1998), Catalyst systems. In: Bradfield J (ed) Resin and blending seminarproceedings, Portland, Oregon and Charlotte, North Carolina. For Prod Soc, p 176).

The use of scavengers, for example natural or bio-based scavengers (Eom Y-G et al. (2006), Mokchae Konghak 34:29-41*;* Kim S et al. (2009); Constr Build Mater 23(6), 2319-2323*;* Kim S et al. (2006), Macromol Mater Eng 291(9), 1027-1034) or other compounds having a good affinity to capture formaldehyde (Boran S, et al. (2011), Int J Adhes 31 (7), 674-678*;* Costa et al. (2012), Journal International Wood Products Journal, Volume 4, Issue 4, Pages 242-247*;* Park et al. (2008), J Appl Polym Sci 110(3): 1573 - 1580), in order to reduce formaldehyde emission from wood-based boards, is commonly adopted.

"Sodium metabisulphite as a scavenger of air pollutants for wood-based building materials", N A Costa et al., International Wood Products Journal, Volume 4 (2013), Issue 4, pages 242-247, studies the different applications of sodium metabisulphite as a formaldehyde scavenger, but it does not provide an in-depth analysis of the loss of mechanical properties and water resistance of the board, which means that this option is not feasible at an industrial level. Also, from the point of view of REACH, ammonium bisulphate is a hazardous substance; the handling of this substance involves significant measures to prevent workers from breathing sulphur oxides in the air.

"Formaldehyde emission in wood based panels: effect of curing reactions", N. A. Costa et al., International Wood Products Journal, Volume 5 (2014), Issue 3, pages 146-150, studies the effect of hexamine as a formaldehyde catalyst-scavenger, the use of acid catalysts versus latent catalysts, and their pros and cons. It establishes that the combination of citric and oxalic acids in solid form with latent ammonium sulphate catalysts is the best solution, combined with a low molar ratio resin, to obtain values of less than 4 mg of formaldehyde per 100 g of dry board, applying the EN 120 perforator method.

The molar ratio of the resins used is too low: 0,90 moles of formaldehyde per mole of urea. In the article, the tensile mechanical properties are very low for the industrial quality standards accepted by the EPF (European Panel Federation).

In the conclusions of the article itself, it justifies the need to find new formaldehyde catalyst-scavenger systems that fulfil the requirements in terms of mechanical properties and formaldehyde emission of the board, which confirms that achieving a solution that fulfils these requirements is currently an industrial challenge.

*"*Scavengers for achieving zero formaldehyde emission of wood-based panels", Nuno A. Costa et al., Wood Science and Technology (2013), 47, pages 1261-1272, examined the performance of three formaldehyde scavengers known in the manufacture of boards: sodium metabisulphite, ammonium bisulphite, and urea. To obtain low formaldehyde emission values by the dessicator method (JIS method), more than 5% of the catalyst must be added in the resin, even up to 15%; this causes the tensile properties to drastically decrease; the boards presented as conclusions of this study were found to fail to comply with the minimum quality standards for the market, so this option is not feasible at the industrial level.

### SUMMARY OF THE INVENTION

The problem to be solved by the present invention thus is to provide an environmentally friendly alternative to formulations based on mineral oil derived waxes or synthetic waxes, such as e.g. paraffin, which are obtainable from renewable resources instead of non-renewable resources. This is solved by the kinetically stable vegetable oil-based O/W formulations according to the invention, which comprise an O/W suspension which contains hydrogenated or partially hydrogenated palm oil, soy oil, low levels of surfactants, and water, which may be manufactured on an industrial level, at reasonable cost levels, and are useful for increasing the hydrophobicity of wood-derived boards and fibreglass or rock wool insulations; they may be used for example in the manufacture of wood-derived boards, fibreboards, particleboards, chipboards, oriented strand boards, fibreglass or rock wool insulations, or combinations thereof. They may also be useful, besides increasing the hydrophobicity, for example as external and internal release formulations during the manufacture of the above listed boards and insulations, or to reduce the energy consumption in industrial refining processes of lignocellulosic material. They present a high kinetic stability and a low viscosity.

Therefore, a first object of the invention is a vegetable oil based formulation, characterized
in that it is kinetically stable;
in that it comprises an oil in water (O/W) suspension, which comprises:
- from 1 wt% to 5 wt% of surfactant, the surfactant being at least one anionic surfactant and at least one non-ionic surfactant, the surfactant being added as such or obtained in situ by addition of between 1 and 2 wt% of an ethanolamine;
- 15 wt% to 50 wt% of hydrogenated or partially hydrogenated palm oil;
- from 0 to 25 wt% of paraffin;
- from 2 to 8 wt% of soy oil;
and in that:
- the total amount of oils, being the sum of palm oil, paraffin and soy oil in the O/W suspension, does not exceed 55 wt%;
- within the total amount of oils, from 2 to 10 wt% is non hydrogenated oil, and the rest is hydrogenated and/or partially hydrogenated oil;
- the iodine value of the total amount of oils is at least 10 g of iodine per 100 g of total amount of oils;
- the O/W suspension has a solids content of between 30 wt% and 55 wt%, and the rest of the suspension, until reaching 100 wt%, is water, the solids content comprising all the components which are different than water.

A further object of the invention is a method for obtaining an O/W suspension of the invention, as defined above, comprising:
- adding a water phase to an oil phase, at least one of them containing an anionic or non-ionic surfactant, in such an amount to obtain a concentration of between about 1 wt% and about 5 wt% in the final emulsion, thus obtaining a W/O emulsion, until the W/O emulsion inverts to an O/W emulsion;
- heating the O/W emulsion to obtain a W/O emulsion;
- cool the W/O emulsion to room temperature, to obtain the O/W suspension of the invention.

A further object of the invention is the use of an O/W formulation according to the present invention in the manufacture of wood derived boards, fibreboards, particleboards, chipboards, oriented strand boards, wood composite boards, or fibreglass or rock wool insulations, or combinations thereof.

The invention also refers to boards (wood derived boards, fibreboards, particleboards, chipboards, oriented strand boards, wood composite boards), comprising a formulation as defined above, further comprising up to 25 wt% of a formaldehyde scavenger, which have a formaldehyde emission of 1 mg of formaldehyde per square meter and hour, or below, as measured by gas analysis method UNE-EN ISO 12460-3:2016.

The invention also refers to fiberglass insulations or rock wool insulations, comprising a formulation as defined above, further comprising up to 25 wt% of a formaldehyde scavenger, which have a formaldehyde emission of 1 mg of formaldehyde per square meter and hour, or below, as measured by gas analysis method UNE-EN ISO 12460-3:2016.

### DETAILED DESCRIPTION OF THE INVENTION

The present invention is related to kinetically stable vegetable oil based formulations, comprising an O/W suspension which contains water and hydrogenated or partially hydrogenated palm oil and soy oil, and having low levels of surfactants, which may be manufactured on an industrial level, and completely or partially avoid the use of non-renewable resources, e.g. petroleum derived resources, e.g. paraffin. Due to their particular composition and particle mean diameter, the formulations have a high kinetic stability and low viscosity. Said formulations are useful for increasing hydrophobicity of wood-derived boards or fibreglass or rock wool insulations; they may thus be used in the manufacture of wood derived boards, wood composite boards, fibreboards (including MDF and HDF boards), particleboards, chipboards, oriented strand boards, plywood, paperboards, or fibreglass or rock wool insulations, or combinations thereof.

An emulsion, according to the IUPAC, is a "fluid colloidal system in which liquid droplets and/or liquid crystals are dispersed in a liquid. The droplets often exceed the usual limits for colloids in size. An emulsion is denoted by the symbol O/W if the continuous phase is an aqueous solution and by W/O if the continuous phase is an organic liquid (an 'oil'). More complicated emulsions such as O/W/O (i.e. oil droplets contained within aqueous droplets dispersed in a continuous oil phase) are also possible."

On the other hand, a suspension, according to the IUPAC, is "a liquid in which solid particles are dispersed".

Although paraffin suspensions are often named as paraffin emulsions, in fact they are suspensions, as the droplets of oil in the water phase, at normal temperature and pressure conditions, are in solid state. Therefore, the correct term "suspension" will be used throughout the present specification, specifically O/W suspension, as it comprises solid particles of oil and wax suspended in water. Nevertheless, the formulations as such are liquid in order to allow an easy application.

Emulsifiers are a group of substances of different origin and properties that will contribute to a greater stabilization of the emulsions or suspensions; this is due mainly to its amphiphilic or double affinity character, which, from the physico-chemical point of view, is defined as a double polar and apolar property. Within this large group of compounds we can find e.g. surfactants.

Oils have the difficulty that they have the property of occluding water inside their structure, normally between 2 and 6 times their weight. This property causes their emulsification to be very complicated, as it leads to the forming of semisolid creams, which make it impossible to be properly applied to any material by e.g. spraying, which is the preferred way of application, for which the product needs to be in a liquid state. High concentration of surfactants may help to emulsify such oils, but surfactants are in part hydrophylic, and as such a high amount of surfactant in the final suspension has the inconvenience of reducing the intrinsic hydrophobicity of the paraffin or other oil/wax used to prepare the emulsion or suspension, because the surfactant, which is amphiphilic, has affinity for water, thus causing the formulations to which they are added to be less hydrophobic, and thus less efficient, showing greater swelling of the wood-derived boards to which they are applied. Therefore, a surfactant concentration as low as possible is desirable.

The suspensions, in order to be useful for the intended uses, i.e. improving the resistance to water and/or facilitating the release from molds and/or curing formaldehyde derived resins and/or scavenging formaldehyde from formaldehyde derived resins in wood derived boards, fibreboards, particleboards, chipboards, oriented strand boards, fibreglass or rock wool, should comply with the following features:
1. High solids content: 45% to 60%.
2.-A stability of the suspension of at least 1 month (kinetic stability), at normal conditions of temperature and pressure.
3.-High performance as a hydrophobing agent.
4.-Low level (below 15%) of surfactants.
5.-Good compatibility with aminoplast resins.
6.-Mechanical shear stability.

This has been achieved by the O/W formulations of the present invention, which comprise an O/W suspension.

### Definitions

In the frame of the present invention, the following terms have the meanings indicated:
"Non-ionic surfactants" are surfactants that do not bear an electrical charge. Although they do not contain an ionic group as their hydrophilic component, hydrophilic properties are conferred on them by the presence of a number of oxygen atoms in one part of the molecule which are capable of forming hydrogen bonds with molecules of water. For example, many long chain alcohols exhibit some surfactant properties, such as fatty alcohols, cetyl alcohol, stearyl alcohol, and cetostearyl alcohol, and oleyl alcohol. Other non-ionic surfactants are alcohol ethoxylates, polyglycol ethers, polyoxyethylene alkyl ethers, secondary alcohol ethoxylates, polyoxyethylene alkyl ethers, polyalkyl glycol alkyl ethers (e.g. polyethylene and polypropylene glycol alkyl ethers), glucoside alkyl ethers, polyethylene glycol alkylphenyl ethers or glycerol alkyl esters.

"Anionic surfactants" are surfactants that contain anionic functional groups at their head, such as sulfate, sulfonate, phosphate, and carboxylates. Prominent alkyl sulfates include ammonium lauryl sulfate, sodium lauryl sulfate (sodium dodecyl sulfate, SLS, or SDS), and the related alkyl-ether sulfates sodium laureth sulfate (sodium lauryl ether sulfate or SLES), and sodium myreth sulfate. Also docusate (dioctyl sodium sulfosuccinate), perfluorooctanesulfonate (PFOS), perfluorobutanesulfonate, alkyl-aryl ether phosphates and alkyl ether phosphates are anionic surfactants.

"Sauter mean diameter", also designated as D(3,2), D32 or D(32) is the mean diameter with the same ratio of volume to surface area as the entire ensemble It was originally developed by German scientist Josef Sauter in the late 1920s. The size of drops is determined based on the absorption/scattering of light. The technique depends on the fact that absorption/scattering is proportional to the surface area of the drops.

The term "kinetically stable" in the frame of the present invention means that the formulations and suspensions to which the term refers do not form creams nor separate into distinct phases within the indicated timeframe, for example, at least 2 months.

"Normal temperature and pressure conditions" refers to a temperature of 20 °C and an absolute pressure of 1 atm.

"W/O emulsion" refers to a water in oil emulsion.

"O/W emulsion" refers to an oil in water emulsion.

"O/W suspension" refers to a suspension comprising solid particles of hydrogenated oil (wax) suspended in water.

"Hydrogenated oil" or "hydrogenated wax" in the frame of the present invention is intended to encompass any level or extent of hydrogenation, i.e., is intended to also include partially hydrogenated oil or wax; the term only excludes non-hydrogenated oil, i.e., natural oil that has not been submitted to any kind of hydrogenation.

"Formaldehyde based resins" or "formaldehyde derived resins", as used in the frame of the present invention, refers to any resin or plastic which is produced from formaldehyde with other reactants, such as urea, phenol, or melamine. For example, urea-formaldehyde resin is a non-transparent thermosetting resin or plastic, produced from urea and formaldehyde. They are used in adhesives, finishes, particleboard, MDF, and molded objects. Phenol formaldehyde resins (PF) or phenolic resins are synthetic polymers obtained by the reaction of phenol or substituted phenol with formaldehyde. They have been widely used for the production of molded products including billiard balls, laboratory countertops, and as coatings and adhesives. Melamine formaldehyde resin is a hard, thermosetting plastic material made from melamine and formaldehyde by polymerization. In its butylated form, it is dissolved in n-butanol and xylene. It is then used to cross-link with alkyd, epoxy, acrylic, and polyester resins, used in surface coatings. There are many types, varying from very slow to very fast curing.

"Formaldehyde scavenger" in the frame of the present invention refers to any compound that allows to reduce the content of free formaldehyde in any product or composition. Any formaldehyde scavenger known in the State of the Art may be used. For example, the formaldehyde scavenger may be selected from, but is not limited to, urea, urea derivatives, hexamine, amino group containing compounds, hexamine, sulphite salts and metabisulphite salts.

"Catalyst for curing formaldehyde based resins", in the frame of the present invention, is meant to be any substance suitable to be used to cure formaldehyde based resins. It may be selected from the group comprising ammonium bisulfite, ammonium nitrate, and ammonium sulfate, but is not limited to said catalysts. Said catalysts are needed to cure resins based on formaldehyde, which are generally used in the manufacture of all kinds of wood derived boards, fibreboards, particleboards, chipboards, oriented strand boards, and similar. If the formulations of the invention contain one or more catalysts, no further catalysts or formulations containing catalysts need to be used during the curing process.

"Wood composite boards" in the frame of the present invention refers to boards obtained by binding and compressing natural fibres, optionally in combination with synthetic fibres, Examples thereof, but not limited to, are particleboard, fibreboard (MDF and HDF), chip boards, oriented strand boards and plywood.

"Synthetic fibres" in the frame of the present invention refers to fibres from polyester, polyethylene or polypropylene.

"Natural fibres" in the frame of the present invention refers to wood fibres, chips, particles, flakes or strands, and/or other natural fibres like flax, hemp, rye straw, wheat straw, rice straw, hemp stalks, kenaf stalks or sugar cane residues.

### Emulsification process

The O/W suspensions according to the invention may be obtained by different methods of emulsification, including methods of emulsification well known in the art.

For example, the O/W suspensions may be obtained by direct emulsification method (sometimes herein referred to as direct O/W method), by slowly adding the oil phase to the water phase, both heated to temperatures between about 60 and about 100 °C, under stirring or equivalent means of mixing, at rates between 100 and 10000 rpm. The surfactant may be contained either in the oil phase or the water phase, normally, but not necessarily, an ionic surfactant will be added to the water phase, and a non-ionic surfactant to the oil phase. Alternatively, the surfactant may be obtained *in situ* by reaction of corresponding reactives.

The O/W suspensions may also be obtained by the EIP (Emulsion Inversion Point) method (sometimes herein referred to as EIP phase inversion method), sometimes also designated as PIC (phase inversion concentration), wherein the water phase is added to the oil phase, both heated to temperatures between about 60 and about 100 °C, thus in first instance obtaining a W/O emulsion. Stirring or dispersion at rates between 100 and 10000 rpm are applied. When further water phase is added, and the ratio water/oil increases in the system, the phases are inverted, and a O/W suspension is obtained, having a particularly small particle (droplet) size, which is not dependent upon the mechanical stirring factor.

A further method of emulsification is a combination of two known phase inversion methods, that is, EIP and PIT (Phase Inversion Temperature), which so far have been only used separately for preparing emulsions (sometimes herein referred to as combined EIP and PIT phase inversion method). This combined method comprises the steps of:
- adding a water phase to an oil phase, both heated to temperatures between about 60 and about 100 °C, under stirring or dispersion at rates between 100 and 10000 rpm, at least one of them containing an non-ionic surfactant, in such an amount to obtain a concentration of between about 1 wt% and about 2 wt% in the final emulsion, thus obtaining a W/O emulsion, until the W/O emulsion inverts to an O/W emulsion;
- heating the O/W emulsion to at least 75°C, until obtaining a W/O emulsion by phase inversion;
- cool the W/O emulsion to room temperature, to obtain an O/W suspension.

On the other hand, the emulsification may be carried out either in a single reactor, by use of either mechanical dispersion, a rotor-stator, or with stirring and homogenizer.

Alternatively, the emulsification may be carried out by using two differentiated reactors, an oil phase reactor and a water phase reactor. The first reactor has a temperature regulating system and a stirrer, while the second mixing reactor or reactor in addition to the temperature control system has a disperser.

The emulsification may be carried out either with stirring, stirring and mechanical dispersion, stirring and rotor-stator (e.g. ULTRA TURRAX® type).

Several routes can be followed to prepare oil in water emulsions. The most obvious is mixing the oil and the water in presence of a surfactant. The results depend strongly on the mixing conditions, such as the mixing speed, the temperature, the type of oil, the type of surfactant and the amounts of each component used.

High energy dispersion methods comprise the elongation of the droplets and the formation of hydrodynamic instability, by means of a high shear, which is generated by a propeller or by turbine mixers, thus producing coarse emulsions (5-100 microns); in order to further reduce the drop size, a large amount of mechanical energy to increase interfacial activity is required, because the Laplace pressure increases, as the drop size decreases (Salager, J.L. et al. (2000), "Emulsion properties and related know-how to attain them", Pharmaceutical Emulsions and Suspensions, F. Nielloud y G. Marti-Mestres Editores, Vol. 105, Drugs and Pharmaceutical Science, Marcel Dekker, New York, EE.UU., chapter 3, pages. 73 - 125).

The formation of an emulsion with an extremely small droplet size not only requires the final system to comply with certain composition and formulation variables, but the process through which the emulsion is obtained is also decisive.

Low energy methods are those in which the energy which is required to produce the emulsion provides from the transitions or phase changes that occur during the formation of the emulsions (Salager, J.L. et al. (2004). "Using emulsion inversion in industrial processes", Advances in Colloid and Interface science, vol. 108-109, 20, 259-272). This is possible by following three methods: transitional inversion, catastrophic inversion and phase inversion emulsification (Salager, J.L. et al. (2006), Emulsion Phase Inversion Phenomena, en: "Emulsions and Emulsion Stability", J. Sjoblom Editor, 2nd Edition, Marcel Dekker, New York, EE.UU., pp. 185-226.).

Transitional inversion includes the phase inversion temperature method, PIT method (Shinoda, H., et al. (1968), "The effect of temperature on the phase equilibria and the types of dispersion of the ternary system composed of water, cyclohexane, and non-ionic surfactant". J. Colloid Interface Sci. 26, 70-74.), which is widely used in industry, and which is based on forming the emulsion by using a sudden change in temperature. However, its use is limited to systems which are formulated with non-ionic surfactants of the ethoxylated type, which change their hydrophilic-lipophilic balance with temperature: at temperatures below the phase inversion temperature, oil-in-water emulsions are formed, while at temperatures above said temperature, water-in-oil emulsions are formed.

Catastrophic inversion takes place when the concentration of the internal phase in a surfactant / water / oil system is very high, generating the formation of a multiple emulsion, because the system is not able to solubilize a greater amount of dispersed phase inside the drops. This can be done in two ways, from the normal side of the emulsion to the abnormal side, when the amount of internal phase or the abnormal side of the emulsion is increased to the normal side.

This is the beginning of the emulsification method initially called emulsion inversion point (EIP) described by Marszall (1976) (Marszall, L. (1976), "Adsorption of nonionic surfactants at the oil-water interface and emulsion inversion point". Colloid ¬ Polymer Sci. 254, 674-675), used by Lin (1978) (Lin, T.J. (1978), "Low-energy emulsification I: principles and applications". J soc. Cosmet. Chem 29, 117-125) and improved by Sagitani (1992) (Sagitani, H (1992), Phase-inversion and D-Phase Emulsification, "Organized Solutions", S.E. Friberg y Lindman B., Editors, Marcel Dekker, New York), and also known as phase inversion concentration (PIC).

In the case of obtaining oil-in-water (O / W) emulsions, the method consists in adding water to a dispersion formed by oil and surfactant, until the final emulsion is formed. By increasing the water content in the initial system, transitions or inversion of microemulsion phases and / or lamellar liquid crystals take place, for the formation of nanoemulsions through phase transition methods (Forgiarini, A. (2001). "Estudio de la relación entre comportamiento fásico y formación de nano-emulsiones de fase externa acuosa", Doctorate Thesis, Chemical Engineering and Metallurgy, Barcelona University, Spain; Morales, D. et al., "A study of the relation between bicontinuos microemulsions and oil/water nanoemulsion formation", Langmuir 19 (2003), 7196-7200).

### Formulations of the invention

The present invention refers, in a first object, to a vegetable oil based formulation, which is characterized
in that it is kinetically stable;
in that it comprises an oil in water (O/W) suspension, which comprises:
- from 1 wt% to 5 wt% of surfactant, the surfactant being at least one anionic surfactant and at least one non-ionic surfactant, the surfactant being added as such or obtained in situ by addition of between 1 and 2 wt% of an ethanolamine;
- 15 wt% to 50 wt% of hydrogenated or partially hydrogenated palm oil;
- from 0 to 25 wt% of paraffin;
- from 2 to 8 wt% of soy oil;
and in that:
- the total amount of oils, being the sum of palm oil, paraffin and soy oil in the O/W suspension does not exceed 55 wt%;
- within the total amount of oils, from 2 to about 10 wt% is non hydrogenated oil, and the rest is hydrogenated and/or partially hydrogenated oil;
- the iodine value of the total amount of oils is at least 10 g of iodine per 100 g of total amount of oils;
- the O/W suspension has a solids content of between 30 wt% and 55 wt%, and the rest of the suspension, until reaching 100 wt%, is water, the solids content comprising all the components which are different than water.

It has surprisingly been found that if the iodine value of the total amount of oils in the formulation is above 10 g of iodine per 100 g of the total amount of oils, the suspensions and thus the formulations therewith obtained are kinetically much more stable than if the iodine value is below 10, as will be shown in the Examples, without compromising the hydrophobant or waterproofing effect of the formulations. According to the state of the art, it was believed that hydrogenated oils had a higher hydrophobic effect, and as such a high hydrogenation effect was intended.

In some embodiments, the soy oil in the formulation is non hydrogenated soy oil, having a iodine value ranging from 120 to 155 gr iodine per 100 gr of soy oil.

The palm oil in the formulation is hydrogenated or partially hydrogenated palm oil. The amount of palm oil and non-hydrogenated soy oil, having a iodine value ranging from 120 to 155 gr iodine per 100 gr of soy oil, can be adjusted within the defined weight percentages, so that the iodine value of the total amount of oils is above 10 g of iodine per 100 g of the total amount of oils. The respective necessary amounts may be easily calculated based on the iodine values of the individual oils.

According to some embodiments, the vegetable oil based formulation of the invention as defined above may comprise up to 25% of a formaldehyde scavenger, with respect to the total weight of formulation. This may be useful when the formulation is used for the manufactures of boards or insulations by the use of formaldehyde based resins; nevertheless, the presence of formaldehyde scavenger for other kind of manufacturing is not deleterious. In any case, if the formulation according to the invention does comprise sufficient amount of formaldehyde scavenger, during the manufacture of the boards or insulations conveniently no further addition of formaldehyde scavengers is necessary to reduce the formaldehyde emissions to the required standards.

According to some embodiments, the vegetable oil based formulation of the invention as defined above may comprise up to 25% of a catalyst for curing formaldehyde derived resins, with respect to the total weight of formulation. This may be useful when the formulation is used for the manufacture of boards and insulations by the use of formaldehyde based resins; nevertheless, the presence of a catalyst for other kind of manufacturing is not deleterious. In any case, if the formulation according to the invention does comprise sufficient amount of catalyst for curing formaldehyde derived resins, during the manufacture of the boards or insulations conveniently no further addition of catalysts is necessary to cure the resins.

According to some embodiments the solids content is between about 45 wt% and about 55 wt%. The solids content refers to the sum of all the components of the formulation which are different from water.

The formulations according to the invention are kinetically stable, which means that the formulations and suspensions to which the term refers do not form creams nor separate into distinct phases within the indicated timeframe, e.g. no solid particles appear throughout the formulation within a time frame. According to some embodiments, the formulation of the invention is kinetically stable during at least 2 months at normal temperature and pressure conditions, preferably at least 3 months, more preferably at least 4 months, still more preferably at least 6 months, even more preferably at least 1 year, and the most preferably at least 2 years. This stability allows the formulation to be commercially distributed and offered, without the need of special conditions or equipment.

The timeframe of kinetical stability may be even further increased, to at least two years, by reducing the storing temperature, e.g. to temperatures lying between 5°C and 15°C, preferably between 5°C and 10°C.

According to some embodiments, the O/W suspension comprised in the formulation of the invention may contain up to 25 wt% of paraffin. Paraffin is the state-of-the-art standard for increasing hydrophobicity of boards or insulations, and may be included to some extent into the formulations of the invention. The paraffin that may be contained in the formulations may be paraffin corresponding to CAS No. 8002-74-2, or slack wax (petroleum), for example as corresponding to CAS No. 64742-61-6.

It has been found that the presence of soy oil in the formulation reduces the initial melting point of the hydrogenated or partially hydrogenated palm oil, and surprisingly seems to contribute to increase the stability of the emulsion. Non hydrogenated soy oil has a iodine value of 120-155 g of iodine per 100 g of oil.

According to some embodiments, the formulation of the invention contains from 4 to 8 wt% soy oil.

According to some embodiments, the formulation of the invention may contain up to about 25 wt% of paraffin and from 2 to 8 wt% soy oil.

Within the O/W suspension, preferably at least one of the palm oil or the soy oil are hydrogenated or partially hydrogenated oils.

In the embodiments wherein the O/W suspension contains paraffin, the oil particles in the suspension have a Sauter mean diameter between about 0,3 and about 10 micrometres, preferably between about 0,3 and about 4 micrometres, more preferably between about 0,3 and about 2 micrometres.

In the embodiments wherein no paraffin is present, i.e., wherein the paraffin content in the O/W suspension is 0%, the oil particles in the suspension have a Sauter mean diameter between about 2 and about 10 micrometres, preferably between about 3 and about 9, more preferably between about 4 and about 8 micrometres, even more preferably between about 4 and about 7 micrometres and most preferably between about 4 and about 6 micrometres.

In the formulation of the invention, preferably at least about 50 wt% of the fatty acids in the total amount of oil are fatty acids have from 20 to 22 carbon atoms. In the case not sufficient fatty acids of said length are contained in the oils used as raw materials, fatty acids having 20 to 22 carbon atoms may be added to the formulation, until the indicated percentage is reached.

In the formulation of the invention, the surfactant is a mixture of at least one non-ionic surfactant and at least one anionic surfactant. The surfactants may either be added to the water or oil phase, or obtained in situ, within the water phase, by a saponification reaction. The weight percentages indicated refer to the final concentration of surfactants within the O/W suspension, independently of whether they were added as such or generated in situ by reaction of the fatty acids contained in the oils or waxes and an ethanolamine which is added to the aqueous phase, before carrying out the emulsification. When adding the aqueous phase to the oil phase, or vice versa, the ethanolamine will react with fatty acids of the oil phase, and generate a surfactant in situ. The ethanolamine may be selected for example, but not limited to, from monoethanolamine, diethanolamine and triethanolamine.

Saponification of fats and oils is the most widely used soap-making process. This method involves heating fats and oils and reacting them with a liquid alkali to produce soap and water (neat soap) plus glycerine.

The other major soap-making process is the neutralization of fatty acids with an alkali. Fats and oils are hydrolysed (split) with a high-pressure steam to yield crude fatty acids and glycerine. The fatty acids are then purified by distillation and neutralized with an alkali to produce soap and water (neat soap).

When the alkali is an amine, for example monoethanolamine or diethanolamine, an amine soap is formed.

Usually amine soaps are formed "in situ" by direct reaction of appropriate amounts of amine and fatty acid.

The carboxylate end of the soap molecule is attracted to water. It is called the hydrophilic (water-loving) end. The hydrocarbon chain is attracted to oil and grease and repelled by water. It is known as the hydrophobic (water-hating) end.

In some embodiments, the surfactant is selected from secondary alcohol ethoxylate and ethoxylated fatty alcohol.

In the formulation of the invention, the ratio of surfactant vs. total amount of oil, generally known as S/O ratio, in the O/W suspension, preferably is between about 4 wt% and about 15 wt%, more preferably between about 4 wt% and about 12 wt%, even more preferably between about 4 wt% and about 8 wt%, the most preferably between about 4 wt% and about 6 wt%.

According to some embodiments, the formulation may contain up to 25 % of a catalyst for curing formaldehyde-based resins; this catalyst, in the frame of the present invention, is meant to be any substance suitable to be used to cure formaldehyde-based resins. It may be selected from the group comprising ammonium bisulfited, ammonium nitrate, and ammonium sulphate, but is not limited to said catalysts. Said catalysts are needed to cure resins based on formaldehyde, which are generally used in the manufacture of all kinds of wood derived boards, fibreboards, particleboards, chipboards, oriented strand boards, and similar. If the formulations of the invention contain one or more catalysts, no further catalysts or formulations containing catalysts need to be used during the curing process.

That is, the present invention also refers to formulations which comprise from 75 to 100% of the O/W suspensions of the present invention, and further up to 25 wt% of at least one catalyst for curing formaldehyde derived resins. Thus, the catalyst for curing formaldehyde derived resins may be a single catalyst or a mixture of catalysts. Preferably, the catalyst is selected from ammonium bisulfite, ammonium nitrate, and ammonium sulfate. That is, the formulations of the present invention may comprise a suspension according to the present invention and one catalyst for curing formaldehyde derived resins, or emulsion formulation according to the present invention and two different catalysts for curing formaldehyde derived resins, or a suspension according to the present invention and three different catalysts for curing formaldehyde derived resins, and so on. For example, the formulations may comprise the suspension according to the present invention and ammonium bisulfite; or the suspension according to the present invention and ammonium nitrate; or the suspension according to the present invention and ammonium sulfate; or the suspension according to the present invention and ammonium bisulfite and ammonium nitrate; or the suspension according to the present invention and ammonium nitrate and ammonium sulfate; or the suspension according to the present invention and ammonium bisulfite and ammonium nitrate and ammonium sulfate. I.e., all the possible combinations are included in the scope of the present invention.

According to some embodiments the formulation of the invention may contain up to 25 % of a formaldehyde scavenger, in order to scavenge excess formaldehyde in the formaldehyde based resins, typically used formaldehyde scavengers are urea, monoethanolamine, and diethanolamine, but other formaldehyde scavengers may be used in the formulations of the invention.

Thus, the present invention also refers to formulations which comprise from 75 to 100% of the O/W suspension according to the present invention, and further up to 25 wt% of at least one formaldehyde scavenger. Thus, the formaldehyde scavenger may be a single compound or a mixture of compounds. Preferably, the formaldehyde scavenger is selected from urea, monoethanolamine, and diethanolamine. That is, the formulations of the present invention may comprise a suspension according to the present invention and one formaldehyde scavenger, or a suspension according to the present invention and two different formaldehyde scavengers, or a suspension according to the present invention and three different formaldehyde scavengers, and so on. For example, the formulations may comprise the suspension according to the present invention and urea; the suspension according to the present invention and monoethanolamine; or the suspension according to the present invention and diethanolamine; or the suspension according to the present invention and urea and monoethanolamine; or the suspension according to the present invention and urea and diethanolamine; or the suspension according to the present invention and monoethanolamine and diethanolamine; or the suspension according to the present invention and urea and monoethanolamine and diethanolamine. I.e., all the possible combinations are included in the scope of the present invention.

The invention also refers to formulations which comprise from 50 to 100% of the suspensions according to the present invention, and further up to 25 wt% of at least one formaldehyde scavenger, and up to 25 wt% of at least one catalyst for curing formaldehyde derived resins. That is, the formulations may comprise the suspension according to the present invention and one formaldehyde scavenger and one catalyst for curing formaldehyde derived resins; or the suspension according to the present invention and one formaldehyde scavenger and two catalysts for curing formaldehyde derived resins; or the suspension according to the present invention and one formaldehyde scavenger and three catalysts for curing formaldehyde derived resins; or the suspension according to the present invention and two formaldehyde scavengers and one catalyst for curing formaldehyde derived resins; or the suspension according to the present invention and three formaldehyde scavengers and one catalyst for curing formaldehyde derived resins; or the suspension according to the present invention and two formaldehyde scavengers and two catalysts for curing formaldehyde derived resins; or the suspension according to the present invention and two formaldehyde scavengers and three catalysts for curing formaldehyde derived resins; or the suspension according to the present invention and three formaldehyde scavengers and one catalyst for curing formaldehyde derived resins; and so on, all kinds of combinations being included in the scope of the present invention. Preferably, the catalyst is selected from ammonium bisulfite, ammonium nitrate, and ammonium sulfate. Preferably, the formaldehyde scavenger is selected from urea, monoethanolamine, and diethanolamine.

These formulations allow to simultaneously improve the resistance to water and facilitate the release from molds and/or cure formaldehyde derived resins and/or scavenge formaldehyde from formaldehyde derived resins, without the need of adding additional products for achieving said results, of the final products to which they are applied. E.g., if the formulation contains a formaldehyde scavenger, no other formaldehyde scavenging products are normally needed; or if the formulation contains a catalyst for curing formaldehyde derived resins, no other catalysing products are normally needed; and so on.

The formaldehyde scavengers and catalysts for formaldehyde derived resins will be incorporated into the suspensions by two preferred methods:
A) They are solubilized in the aqueous phase before starting the emulsification process.
B) They will be incorporated by means of agitation and / or mechanical dispersion into a finished suspension as defined above, according to the invention.

Other additives may be added to the formulations, such as e.g. one or more of biocides or coadyuvants and process additives, such as rheological agents, anti-foaming agents, stabilizers, appearance modifiers, thickeners, gelling agents, viscosifying or texture agents, fluidizing agents, diluents and fillers.

Rheological agents are a very important category of process additives, whose function is to act on the fluid-mechanical behaviour of liquid compounds or powders. As it facilitates or inhibits the displacement and depending on the field of application, they are sometimes also referred to as thickeners, gelling agents, viscosifying or texture agents or fluidizing agents.

Stabilizers include a wide variety of reagents that prevent degradation of product quality over time under the influence of physicochemical (sedimentation, flocculation), chemical (oxidation, photodegradation) or biological (microbial attack) phenomena.

The appearance modifiers resemble the previous additives since they act on another sense, the appearance. They include different compounds capable of interacting with light such as opaque white pigments, black and coloured pigments, pearlescent, fluorescent or phosphorescent compounds and agents that produce a matte appearance.

Process additives combine a wide range of compounds as they include all formulation auxiliaries that facilitate product preparation operations and their application.

Diluents and fillers may fall into this category even though they play no role in the efficacy of the formula. In effect, they are often introduced into the formula to lower their cost and increase their volume or their weight. In fact, they are important since they serve as the matrix for the active compounds and thus facilitate their manipulation by ensuring the cohesion of the powders and decreasing the viscosity of the liquid formulas. They are distinguished from other adjuvants by two features: they are cheap and are incorporated into the formula in high proportions.

Some commercial additives that may be used and have been tested in the frame of the present invention are, as an illustrative example:
Biocides: Mergal® 758, Acticide® MBS, Mirecide® M / 85.

Antifoaming agents: BYK® 037, BIY® 12, Foammaster® MO NXZ, Contrapen® PR 194, Mergal® 758, Mergal® V684k, Mergal® 721K3.

### Industrial applications

The formulations of the present invention may be applied to a variety of products for increasing their hydrophobicity, i.e. to improve their resistance to water, mainly to all kind of hydrophilic materials, mainly materials comprising cellulosic fibres, either vegetable or wood fibres, such as items obtained from solid wood or composites comprising cellulosic fibres, e.g. strands, particles, fibres and chips providing from wood or from other vegetable sources, such as rye straw, wheat straw, rice straw, hemp stalks, kenaf stalks or sugar cane residues, optionally combined with synthetic fibres. Such hydrophilic materials comprising cellulosic fibres include, but are not limited to, solid wood boards, microlaminated wood boards (LVL), plywood boards, oriented strand boards (OSB), particleboards agglomerated with resins, particleboards agglomerated with cement, fibreboards (including MDF and HDF boards), wood-plastic composites (WPCs), which are hydrophilic materials made of wood fibre and/or wood flour and thermoplastic(s) such as polyethylene, polypropylene, polyvinyl chloride, and wood composites fabricated with inorganic binders such as gypsum, Portland cement or magnesia cement, containing between 10 and 70 wt% of wood particles. The formulations may also be used to increase the hydrophobicity of fibreglass insulations and rock wool insulations.

The formulations improve the water repellent properties of the materials to which they are applied, that is, the resistance to water, especially reducing the swelling of the materials when exposed to water, and also the absorbance of water.

An object of the invention is the use of a formulation according to the present invention in the manufacture of articles selected from wood derived boards, wood composite boards, fibreboards, particleboards, chipboards, oriented strand boards, plywood, paperboard, fibreglass or rock wool insulations, or combinations thereof.

The above use will increase the hydrophobicity of the manufactured articles, namely wood derived boards, wood composite boards, fibreboards, particleboards, chipboards, oriented strand boards, plywood, paperboard, fibreglass or rock wool insulations, manufactured with the formulations according to the invention.

The articles may be manufactured by using a formaldehyde based resin in order to achieve the cohesion of fibers, particles, chips, etc.

In such case, the use of the formulation according to the invention, further comprising up to 25 wt% of at least one formaldehyde scavenger, further reduces the free formaldehyde in the manufactured articles, i.e., reduces the emission of formaldehyde from the manufactured articles.

In some embodiments, said formaldehyde emission is reduced to 1 mg of formaldehyde per square meter and hour, or below, as measured by gas analysis method UNE-EN ISO 12460-3:2016.

The formulations may also be useful as internal mold release formulations. The formulations may for example be used in the manufacture of molded items, such as boards or panels, to avoid the adherence of fibres or chips, agglomerated with synthetic resins, to the metal parts of the process, thus reducing the degree of soiling of the manufacturing process.

The formulations may also be useful as external mold release formulations. The formulations may for example be applied onto the surface of the layers or sandwich of fibres and/or chips and/ or particles and/or fibreglass or rock wool, for example, but not limited to, by spraying, before being pressed in a press, during the manufacture of cellulose-derived boards, wood derived boards, fibreboards, particleboards, chipboards, oriented strand boards, fibreglass or rock wool, or combinations thereof.

The formulations of the present invention further provide, additionally to improving several features of the final products, as indicated above, the technical advantage of reducing the energy consumption, both during the preparation of the suspension and formulation, in comparison to paraffin based emulsions of the state of the art, and during their application.

This energy saving is based on the fact that no homogenizers are used in the process of emulsification by low mechanical energy, thus saving at least approximately 10 kwh per ton of manufactured suspension. The mechanical energy required in the emulsification process is reduced by more than 50%.

When performing the industrial refining process of lignocellulosic material (for example, but not limited to, MDF or paper pulp) using the formulations of the invention, in comparison to the use of traditional paraffin suspensions, a reduction of around 15-20% of energy consumption is detected, for example a reduction from 140 kwh/tn of refined dry pine wood when using traditional paraffin suspensions, to 115 kwh/tn of refined dry pine wood when using the formulations according to the present invention, was observed.

Therefore, a further aspect of the invention is an industrial refining process of lignocellulosic material, characterized by the use of formulations according to the present invention. In a particular embodiment, said industrial refining process has an energy consumption which is reduced in more than 10% in comparison to an industrial refining process of lignocellulosic material using paraffin suspensions according to the state of the art, preferably in more than 15%, more preferably between 15 and 20%.

As a particular embodiment, the fibreboard may be a board manufactured by the use of lignocellulosic fibres by using heat and/or pressure, according to the norm EN 316. Still another embodiment of a fibreboard, a hard fibreboard as defined in the norm EN316, manufactured from lignocellulosic fibres by "wet process", i.e., with a water content of the fibres, when formed into the board, of 20% or more, having a density of 900 kg/m3 or more. As a particular embodiment, the particleboard agglomerated with resins is one manufacture by applying heat and pressure to wood particles (chips, particles, sawdust, shavings and the like) and/or other lignocellulosic materials in particle form (hemp, flax, bagasse fibres and the like), by addition of a binder, according to the norm EN 309. As a particular embodiment, the oriented strand board (OSB) is constituted by several layers of wood chips, of determined shape and thickness, under addition of a binder, according to the norm EN 300.

When the formulations further comprise at least one formaldehyde resin and at least one catalyst for curing formaldehyde based resins, and are applied in the manufacture of wood-derived panels or boards, panels or boards may be obtained that comply with the European norms, without the need of further compounds or products, and even be classified as E1 according to the norm EN 120, with respect to their formaldehyde content, or even reach a CARB II classification, according to the norm ASTM E 1333.

Thus another object of the invention are boards (wood derived boards, wood composite boards, fibreboards, particleboards, chipboards, plywood, paperboards, oriented strand boards), obtained by using a formaldehyde derived resin and the formulation of the invention which further comprises a formaldehyde scavenger, having a formaldehyde emission of 1 mg of formaldehyde per square meter and hour, or below, as measured by gas analysis method UNE-EN ISO 12460-3:2016.

The formulations of the invention may also be applied to fibreglass or rock wool insulations to improve their resistance to water and, if the formulations comprise, further to the suspension, at least one catalyst for curing formaldehyde based resins, they also act as a catalysing formulation for curing the formaldehyde derived resins of fibreglass or rock wool insulations. Or if the formulations comprise, further to the suspension, at least one formaldehyde scavenger, they also act as a formulation for scavenging formaldehyde in excess.

Another object of the invention therefore are fiberglass or rock wool insulations, obtained by using a formaldehyde derived resin and the formulation of the invention which further comprises a formaldehyde scavenger, having a formaldehyde emission of 1 mg of formaldehyde per square meter and hour, or below, as measured by gas analysis method UNE-EN ISO 12460-3:2016.

The present invention thus refers to the use of a formulation according to the invention, for improving the resistance to water of wood derived boards, wood composite boards, fibreboards, particleboards, chipboards, oriented strand boards, plywood, paperboards, or fibreglass or rock wool insulations. The present invention also refers to wood derived boards, wood composite boards, fibreboards, particleboards, chipboards, oriented strand boards, plywood, paperboards or fibreglass or rock wool insulations obtained by the use of the formulations of the invention.

A further object of the invention is the use of an O/W formulation according to the present invention in the manufacture of wood derived boards, wood composite boards, fibreboards, particleboards, chipboards, oriented strand boards, plywood, paperboard, or fibreglass or rock wool insulations, or combinations thereof. The present invention also refers to wood derived boards, fibreboards, particleboards, chipboards, oriented strand boards, boards or other insulation articles made from fibreglass or rock wool, or combinations thereof, obtained by the use of the formulations of the invention.

The present invention also refers to the use of a formulation according to the invention, as an internal mold release formulation in the manufacture of wood derived boards, wood composite boards, fibreboards, particleboards, chipboards, oriented strand boards, plywood, paperboards, or fibreglass or rock wool insulations, or combinations thereof. Therefore, the formulations may be used, for example, to reduce or avoid the adherence of fibres, chips or particles, glued with synthetic resins, to the metal parts of the manufacturing process, reducing the degree of soiling of the manufacturing process. The present invention also refers to wood derived boards, wood composite boards, fibreboards, particleboards, chipboards, oriented strand boards, plywood, paperboards or fibreglass or rock wool insulations, or combinations thereof, obtained by the use of the formulations of the invention.

Further, the invention refers to the use of a formulation according to the invention, as an external mold release formulation for application to the layers or sandwiches of fibres and/or chips and/ or particles and/or fibreglass or rock wool, prior to being pressed in a press, in the manufacture of wood derived boards, wood composite boards, fibreboards, particleboards, chipboards, oriented strand boards, plywood, paperboard, or fibreglass or rock wool insulations, or combinations thereof. Therefore, the formulations may be used, for example, to reduce or avoid the adherence of the panels or boards to the manufacturing process. The present invention also refers to wood derived boards, wood composite boards, fibreboards, particleboards, chipboards, oriented strand boards, plywood, paperboards, or fibreglass or rock wool insulations, or combinations thereof, obtained by said use.

### Manufacture of MDF boards

The Composite Panel Association defines medium density fibreboard (MDF) as a dry-formed panel product manufactured from lignocellulosic fibers combined with a synthetic resin or other suitable binder. The panels are compressed to a density of from 496 to 801 kilograms per cubic meter (kg/m³) in a hot press. The entire interfibre bond is formed by a synthetic resin or other suitable organic binder.

MDF has more uniform density throughout the board and has smooth, tight edges that can be machined. It can be finished to a smooth surface and grain printed, eliminating the need for veneers and laminates. Most of the thicker MDF panels are used as core material in furniture panels. Medium density fibreboard panels thinner than 1.27 cm typically are used for siding.

The general steps used to produce MDF include mechanical pulping of wood chips to fibers (refining), drying, blending fibers with resin and sometimes wax, forming the resinated material into a mat, and hot pressing.

The furnish for MDF normally consists of wood chips. Wood chips typically are delivered by truck or rail from offsite locations such as sawmills, plywood plants, furniture manufacturing facilities, satellite chip mills, and whole tree chipping operations. If wood chips are prepared onsite, logs are debarked, cut to more manageable lengths, and then sent to chippers. If necessary, the chips are washed to remove dirt and other debris.

Clean chips are softened in a steam-pressurized digester, then transported into a pressurized refiner chamber. In the refiner chamber, single or double revolving disks are used to mechanically pulp the softened chips into fibers suitable for making the board.

From the refiners, the fibers move to the drying and blending area. A rotary predryer may be used for initial drying of relatively wet furnish. Regardless of whether or not a predryer is used, tube dryers typically are used to reduce the moisture content of the fibers to desired levels. Single-stage or multiple-stage tube drying systems are commonly used in MDF manufacture. Most of the multiple-stage tube drying systems incorporate two stages. In multiple-stage tube dryers, there is a primary tube dryer and a second stage tube dryer in series separated by an emission point such as a cyclonic collector. Heat is usually provided to tube dryers by the direct firing of propane, natural gas, or distillate oil or by indirect heating.

The sequence of the drying and blending operations depends on the method by which resins and other additives are blended with the fibers. Urea-formaldehyde (UF) resins are the most common resins used in the manufacture of MDF. Phenolic resins, melamine resins, and isocyanates are also used. Some plants inject resins into a short-retention blender, while most facilities inject resin formulations into a blowline system. If resin is added in a separate blender, the fibers are first dried and separated from the gas stream by a fiber recovery cyclone, then conveyed to the blender. The fibers then are blended with resin, wax, and any other additives and conveyed to a dry fiber storage bin.

If a blowline system is used, the fibers are first blended with resin, wax, and other additives in a blowline, which is a duct that discharges the resinated fibers to the dryer. After drying, the fibers are separated from the gas stream by a fiber recovery cyclone and then conveyed to a dry fiber storage bin.

Air conveys the resinated fibers from the dry storage bin to the forming machine, where they are deposited on a continuously moving screen system. The continuously formed mat must be prepressed before being loaded into the hot press. After prepressing, some pretrimming is done. The trimmed material is collected and recycled to the forming machine.

The prepressed and trimmed mats then are transferred to the hot press. The press applies heat and pressure to activate the resin and bond the fibers into a solid panel. The mat may be pressed in a continuous hot press, or the precompressed mat may be cut by a flying cutoff saw into individual mats that are then loaded into a multi-opening, batch-type hot press. Steam or hot oil heating of the press platens is common in domestic MDF plants. After pressing, the boards are cooled, sanded, trimmed, and sawed to final dimensions. The boards may also be painted or laminated. Finally, the finished product is packaged for shipment.

The formulations of the invention may be used in the manufacture of MDF boards, both in order to increase their hydrophobicity, and to reduce their adherence to the equipment during the manufacture.

### BRIEF DESCRIPTION OF THE FIGURES

Figures 1 a) and b) show representative SEM images corresponding to sample FORESA WAX 2102. As can be observed, the sample is homogeneously distributed on the surface of the glass coverslip where it was deposited giving rise to the formation of a film (Figure a)). In some parts of the sample, it is possible to observe some spherical morphology which could be due to the formation of particles previous to their coalescence as a film (Figure b)).
Figures 2 a) and b) show representative SEM images corresponding to sample S21 of Example 5. As can be observed, the sample is constituted of well-separated spheres that present a high polydispersity.
Figure 3 graphically represents the viscosity measured at different shear rates for the formulation according to the invention S21 at different dates (reflected by different shapes).
Figure 4 shows a graph of the distribution of the Sauter diameter of the particles, at different points of time: weeks 0, 1, 2, 3 and 4, for the formulation S8.

### EXAMPLES

In the following, the invention will be further illustrated by means of Examples and Comparative Examples. The Examples should in no case be interpreted as limiting the scope of the invention, but only as an illustration of the invention.

Throughout the Examples, the kinetically stable vegetable oil based formulations of the invention are repeatedly compared to commercial paraffin suspensions, which correspond to the state of the art standard usually used. They are available to the public from the Spanish company FORESA, S.A. (http://www.foresa.com/en), offered under the denominations FORESA WAX 2102 (the European UFI (https://poisoncentres.echa.europa.eu/es/ufi-generator) for this suspension nowadays is 30001013/1) and FORESA WAX 1102 (the European UFI (https://poisoncentres.echa.europa.eu/es/ufi-generator) for this suspension nowadays is 30001399/1).

FORESA WAX 2102 contains a combination of two types of paraffin, namely about 45 wt% of a paraffin with a low oil content (oil content below 6 wt%, melting point 49-58 °C), and about 11 % of a paraffin with high oil content (oil content maximum 12 wt%, melting point 42-53°C), has a solids content of 58-62wt% and a pH at 25°C between 8,5 and 10,5.

FORESA WAX 1102 only contains paraffin with high oil content (oil content between 6 and 12 wt%, melting point 42-53°C), has a solids content between 58 and 62 wt% and a pH at 25°C between 8,5 and 10,5,

### Example 1: preparation of formulations

Diverse formulations have been prepared.

Some have been prepared by direct O/W emulsion, others by EIP phase inversion method, others by a combined EIP and PIT method. The methods have been explained above.

In TABLE 1 (see below), a list of some of the prepared formulations is shown, detailing the weight percentage of the individual components, the saturation level of the palm oil used (by indication of the iodine value), and the type of surfactant used. Also, the method of emulsification is indicated:
a: Direct O/W method
b: EIP method
c: Combined EIP and PIT method

In a further column, the Sauter particle mean diameter is indicated. All of the formulations obtained had a stability of at least 2 months at normal temperature and pressure conditions (i.e., a temperature of about 20 °C and an absolute pressure of about 1 atm).

Those formulations having a iodine value of the total amount of oil above 10 gr I₂ per 100 gr of total oil are according to the present invention.

**TABLE 1**

| **O/W Suspension (S) No.** | **Solids content (%)** | **Paraffin (wt%)** | **Hydrogenated palm oil (iodine value)** | **Hydrogenated palm oil (wt%)** | **Soy oil (wt%)** | **Surfactant** | **Surfactant (%)** | **long chain fatty acid (wt%)** | **Ethanolamine (wt%)** | **Emulsification method** | **Kinetic stability** | **Sauter Diameter (microns)** | **Iodine value of total oil** |
|---|---|---|---|---|---|---|---|---|---|---|---|---|---|
| S1 | 46 | 20 | ≤ 10gr I2/100gr | 20 | 0 | Etoxilated fatty Alcohol | 2 | 2 | 2 | c | 2 MONTHS | 0,40 | < 10 gr I2/100gr |
| S2 | 46 | 20 | ≤ 10 gr b/100gr | 20 | 0 | Etoxilated Fatty Alcohol | 2 | 2 | 2 | c | >1 MONTH | 0,77 | <10gr I2/100gr |
| S3 | 45 | 8 | ≤ 10 gr I2/100gr | 32 | 0 | Etoxilated Fatty Alcohol | 1 | 2 | 2 | a | 2 MONTHS | 9,30 | < 10 gr I2/100gr |
| S4 | 45,5 | 8 | ≤ 10 gr I2/100gr | 32 | 0 | Etoxilated Fatty Alcohol Secondary Alcohol Ethoxylate | 1,5 | 2 | 2 | a | >3 MONTHS | 7,87 | < 10 gr I2/100gr |
| S5 | 45 | 0 | ≤ 10 gr I2/100gr | 36 | 4 | Secondary Alcohol Ethoxylate | 1 | 2 | 2 | a | >2 MONTHS | 7,67 | > 10 gr I2/100gr |
| S6 | 45 | 4 | ≤ 10 gr I₂/100gr | 36 | 0 | Secondary Alcohol Ethoxylate | 1 | 2 | 2 | a | 3 MONTHS | 7,51 | < 10 gr I2/100gr |
| S7 | 49 | 0 | ≤ 10 gr I₂/100gr | 36 | 8 | Secondary Alcohol Ethoxylate | 1 | 2 | 2 | a | 3 MONTHS | 6,11 | > 10 gr I2/100gr |
| S8 | 49 | / | ≤ 10 gr I2/100gr | 40 | 4 | Secondary Alcohol Ethoxylate | 1 | 2 | 2 | a | 1 MONTH | 7,30 | < 10 gr I2/100gr |
| S9 | 45 | / | ≤ 10gr I₂/100gr | 40 | / | Secondary Alcohol Ethoxylate | 1 | 2 | 2 | a | > 2 MONTHS | 7,0 | < 10 gr I2/100gr |
| S10 | 45 | / | ≤ 10 gr I₂/100gr | 36 | 4 | Secondary Alcohol Ethoxylate | 1 | 2 | 2 | a | >2 MONTHS | 7,0 | > 10 gr I2/100gr |
| S11 | 48 | / | ≤ 10 gr I₂/100gr | 35 | 5 | Secondary Alcohol Ethoxylate | 1 | 5 | 2 | a | 2 MONTHS | 7,0 | > 10 gr I2/100gr |
| S12 | 50 | / | ≤ 10 gr I₂/100gr | 40 | 5 | Secondary Alcohol Ethoxylate | 1 | 2 | 2 | a | 2 MONTHS | 5,39 | > 10 gr I2/100gr |
| S13 | 45 | / | ≤10gr I₂/100gr | 35 | 5 | Secondary Alcohol Ethoxylate | 1 | 2 | 2 | b | 4 MONTHS | 6,69 | > 10 gr I2/100gr |
| S14 | 44,5 | / | ≤ 10 gr I₂/100gr | 20 | 20 | Secondary Alcohol Ethoxylate | 1 | 2 | 2 | a | 5 MONTHS | 6,40 | > 10 gr I2/100gr |
| S15 | 47 | / | ≤ 10 gr I₂/100gr | 36 | 6 | Secondary Alcohol Ethoxylate | 1 | 2 | 2 | a | 2 MONTHS | 5,0 | > 10 gr I2/100gr |
| S16 | 47 | / | ≤ 10 gr I₂/100gr | 36 | 6 | Secondary Alcohol Ethoxylate | 1 | 2 | 2 | a | 2 MONTHS | 5,0 | > 10 gr I2/100gr |
| S17 | 47 | / | ≤ 10 gr I₂/100gr | 36 | 6 | Secondary Alcohol Ethoxylate | 1 | 2 | 2 | a | 2 MONTHS | 5,0 | >10gr I2/100gr |
| S18 | 45 | / | ≤ 10 gr I₂/100gr | 36 | 4 | Secondary Alcohol Ethoxytate | 1 | 2 | 2 | a | 4 MONTHS | 4,27 | > 10 gr I2/100gr |
| S19 | 47 | / | ≤ 10 gr I₂/100gr | 36 | 6 | Secondary Alcohol Ethoxylate | 1 | 2 | 2 | a | 4 MONTHS | 4,76 | > 10 gr I2/100gr |
| S20 | 51 | / | ≤ 10 gr I₂/100gr | 40 | 6 | Secondary Alcohol Ethoxylate | 1 | 2 | 2 | a | 2 MONTHS | 5,0 | > 10 gr I2/100gr |
| S21 | 45 | / | ≤ 10 gr I₂/100gr | 36 | 4 | Secondary Alcohol Ethoxylate | 1 | 2 | 2 | a | 4 MONTHS | 5,63 | > 10 gr I2/100gr |

| | | | | | | | | | | | | | |
|---|---|---|---|---|---|---|---|---|---|---|---|---|---|
| a: Direct O/W method b: EPI phase inversion method c: Combined EIP and PIT phase inversion method | | | | | | | | | | | | | |

### Example 2: detailed preparation of an emulsion or suspension according to the invention by direct O/W method: S6 (see TABLE 1)

20 gr BE-30 paraffin, 180 gr hydrogenated palm wax, having an iodine value of ≤ 10 gr I₂/100gr, and 5 gr of Tergitol® 15-S were mixed, introduced in an oil phase reactor, and heated to about 70°C. 275 gr water were introduced in a water phase reactor and heated to about 70°C. The oil phase was slowly added to the water phase at a rate of 20 gr/min. The mixture was mixed, at a stirring rate of 450 rpm. Subsequently the mixture was cooled, at a rate of 4,5 °C per minute, until reaching a temperature of 20-25°C. Almost 500 gr of a liquid suspension were obtained, having a pH value of about 10, and about 45% of solids. The suspension was kinetically stable for at least 3 months, at normal pressure and temperature conditions.

### Example 3: detailed preparation of an emulsion or suspension according to the invention by direct O/W method: S9 (see TABLE 1)

200 gr melted hydrogenated palm wax, having an iodine value of ≤ 10 gr I₂/100 gr, were introduced in an oil phase reactor, 7 g long chain fatty acid added, and heated to about 70°C under stirring at about 1000 rpm. 275 gr water were introduced in a water phase reactor, and 10 gr diethanolamine was added, in order to obtain anionic surfactant in situ, by reaction with fatty acids; and the reactor content was heated to about 70°C. The oil phase was slowly added to the water phase at a rate of 14 gr/min, with a dispersion rate of 150 rpm. Once the addition is completed, 5 gr of a non-ionic surfactant, a secondary alcohol ethoxylate, for example Tergitol 15-S-9, are added. The reaction of diethanolamine and fatty acids to obtain an anionic surfactant has already taken place. The mixture was stirred during 16 min. Subsequently the mixture was cooled, at a rate of 4,5 °C per minute, until reaching a temperature of 20-25°C. Almost 500 gr of a liquid suspension were obtained, having about 45% of solids. The suspension was kinetically stable for at least 2 months, at normal pressure and temperature conditions.

### Example 4: detailed preparation of an emulsion or suspension according to the invention by direct O/W method: S11 (see TABLE 1)

350 gr hydrogenated palm wax, having an iodine value of ≤ 10 gr I₂/100 gr, and 50 gr soy oil were mixed, introduced in an oil phase reactor, and heated to about 95°C. 556 gr water were introduced in a water phase reactor 20 gr diethanolamine were added, and the mixture heated to about 95°C. The oil phase was slowly added to the water phase at a rate of 40 gr/min. The mixture was mixed, at a stirring rate of 800 rpm. 10 gr of Tergitol® 15-S-9 were added. Subsequently the mixture was cooled, at a rate of 7 °C per minute, until reaching a temperature of 20-25°C. Almost 1000 gr of a liquid suspension were obtained, having about 48% of solids. The suspension was kinetically stable for at least 1 month, at normal pressure and temperature conditions.

### Example 5: industrial scaling of the preparation of a suspension according to the invention by direct O/W method: S21 (see TABLE 1)

In a 4 m³ reactor, being equipped with a disperser at 120rpm, 1405 kg water were introduced. 30 kg diethanolamine, and subsequently 35 kg of long chain fatty acid, were charged. 100 kg soy oil were charged, together with 0,5 kg of antifoaming agent. Subsequently, 25 kg Tergitol 15-S-9 were added into the reactor. Then 900 kg solid powder of hydrogenated palm wax, having a iodine value of ≤ 10 gr I₂/100 gr, were added, at a rate of 50 kg/min, as well as another 2 kg of antifoaming agent. The mixture is stirred at 120 rpm, during 30 minutes at a temperature of 75 °C. While the mixture was cooled, at a rate of 1 °C per minute, until reaching a temperature of 20-25°C, 2,5 kg of a biocide were added. Almost 2500 kg of a liquid suspension were obtained, having about 48% of solids. The suspension was kinetically stable for at least 4 months, at normal pressure and temperature conditions. Variables such as Sauter diameter were comparable to the suspension obtained at laboratory scale.

### Example 6: detailed preparation of an emulsion or suspension according to the invention by the EPI phase inversion method: S13 (see TABLE 1)

175 gr melted hydrogenated palm wax, having an iodine value of ≤ 10 gr I₂/100 gr, 25 gr soy oil and 7 gr of long chain fatty acid were mixed, introduced in an oil phase reactor, and heated to about 70°C, under stirring at about 150 rpm. 275 gr water were introduced in a water phase reactor, 10 gr diethanolamine were added, in order to obtain anionic surfactant in situ by reaction with fatty acids, and the mixture was heated to about 70°C. The oil phase was added to the water phase at a rate of 30 gr/min, and dispersed at a rate of 800 rpm. Subsequently, 5 g of Tergitol 15-S-9 is added, and the mixture stirred at 800 rpm during 25 minutes. The mixture was cooled at a rate of 7°C per minute until reaching 20-25°C. The obtained suspension was kinetically stable for at least 4 months, at normal pressure and temperature conditions.

### Example 7: detailed preparation of an emulsion or suspension by the combined EIP and PIT method: S2 (see TABLE 1)

100 gr BE-30 paraffin, 100 gr melted hydrogenated palm wax, having an iodine value of ≤ 10 gr I₂/100gr, and 7 gr of long chain fatty acid were mixed, in an oil phase reactor, and heated to about 80°C under gentle stirring at about 120 rpm. 275 gr water were introduced in a water phase reactor, 10 gr diethanolamine were added, in order to obtain anionic surfactant in situ, and the mixture heated to about 70°C. The water phase was added to the oil phase at a rate of 40 gr/min, with an ultraturrax rate of 10.000 rpm (EIP method). Once the addition is completed, 10 gr of the surfactant Findet 1618-AR were added, maintaining a temperature of at least 85°C (PIT method). The mixing was maintained during 20 min. The mixture was homogenized at 350 bar. The mixture was then cooled to 20-25°C, at a rate of 6°C per minute, to obtain an O/W suspension. The obtained suspension was stable for at least 1 month.

### Example 8: Comparative Z-potential of commercial paraffin suspension FORESA WAX 2102 and suspension S21 of the invention

Zeta Potential analysis is a technique for determining the surface charge of nanoparticles in solution (colloids). Zeta potential is an indicator of the electrostatic interactions between particles and it is normally employed to predict the colloidal stability of a dispersion. The zeta potential has been obtained from the electrophoretic mobility by applying the Smoluchowski approximation or thin double layer assumption. TABLE 2 shows the results corresponding to the Z-potential obtained for the two samples under study: S21 of the invention and a commercial paraffin suspension, commercialized as FORESA WAX 2102, which has a solids content of between 58 and 62 % and a shelf life at 20°C of 6 months.

**TABLE 2**

| **Sample** | **Z-potential (mV)** |
|---|---|
| Foresa Wax 2102 | -25.4 ± 3.8 |
| S21 | -42.7 ± 5.9 |

Both samples presented negative Z-potential values. Sample S21 presents a more negative Z-potential than the sample FORESA WAX 2102, which indicates a higher colloidal stability of S21.

### Example 9: Scanning electron microscopy (SEM) images of commercial paraffin suspension FORESA WAX 2102 and suspension S21 of the invention

SEM is a technique to examine and analyse the surface morphology of samples. The electron beam from an electron gun column is demagnified by condenser lenses into a fine spot as small as 1nm of diameter which is scanned across a selected area of the sample surface. Interactions between the electron beam and the sample give rise to different intensity signals which are collected by detectors and stored in the computer memory to be subsequently mapped as variations in brightness on the image display. The most widely used signal produced by the interaction of the primary electron beam with the sample is the secondary electron emission signal which varies with the topography of the sample surface being dark for recesses and bright for edges. The magnification of the image is determined by the ratio of the size of the displayed image to the size of the area scanned on the sample.

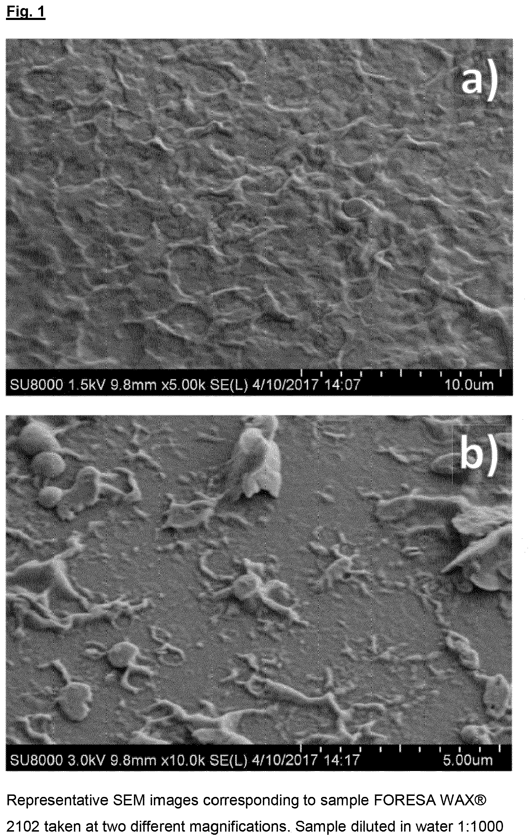

Figures 1 a) and b) show representative SEM images corresponding to sample FORESA WAX 2102. As can be observed, the sample is homogeneously distributed on the surface of the glass coverslip where it was deposited giving rise to the formation of a film (Figure a)). In some parts of the sample, it is possible to observe some spherical morphology which could be due to the formation of particles previous to their coalescence as a film (Figure b)).

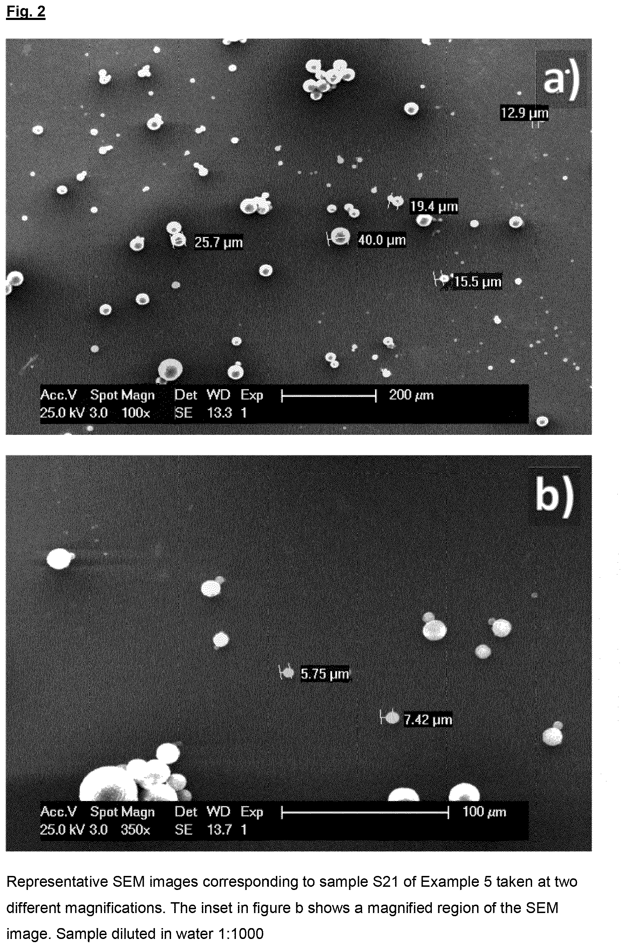

Figures 2 a) and b) show representative SEM images corresponding to sample S21 of Example 5. As can be observed, the sample is constituted of well-separated spheres that present a high polydispersity.

### Example 10: Preparation of a formulation of the invention, comprising urea as a formaldehyde scavenger

100 g of BE-30 paraffin, 100 g of hydrogenated palm wax, having an iodine value of less than 10, are charged, and 10 gr of an ethoxylated fatty alcohol of HLB (lipophilic hydrophile balance) between 10 and 14 is added on the oil phase in the oil phase reactor. This mixture is maintained under stirring and at a minimum temperature of 60 °C, between 60 °C and 95 °C, preferably between 70 °C and 80 °C. 10 g of long chain fatty acid are incorporated into the oil phase reactor.

600 g of water are introduced into the aqueous phase reactor, is kept under stirring and at a temperature of at least 60 ° C and maximum of 100 ° C, preferably between 70 ° C and 80 ° C. Subsequently the corresponding ethanolamine for the formation of the soap is then incorporated, e.g. 7 g of diethanolamine. The formaldehyde scavenger and/or catalyst are then slowly incorporated, e.g. 200 g of urea are incorporated.

The oily phase is slowly added to the aqueous phase and the mixture is maintained under agitation at a preferred temperature of 75 ° C.

The pre-emulsion is homogenized in a homogenizer, the homogenizer pressure is set between 0 and 350 hidraulic kg / cm2, depending on the desired final particle diameter and then cooled to 25 ° C.

For the same emulsification conditions given, the particle diameter is inversely proportional to the applied pressure; if desired, the suspensions may be recirculated before cooling, to pass it 2 or more times through the homogenizer, in order to further reduce the particle diameter.

The same procedure may be used in order to add a catalyst for formaldehyde derived resins, or both a formaldehyde scavenger and a catalyst for formaldehyde derived resins.

### Example 11: Preparation of a formulation of the invention, comprising urea as a formaldehyde scavenger and ammonium bisulphite as a catalyst for formaldehyde derived resins

A suspension of hydrogenated palm oil with a solids content of 40% according to the invention is prepared, at room temperature, and separately a water solution of the formaldehyde scavenger and / or catalyst are prepared: an urea solution, having a solids content of 50%, and 70% ammonium bisulfite.

250 g of a 50% urea solution and 500 g of a wax suspension of the invention, having a solids content of 40%, are mixed at normal temperature and under stirring conditions in a reactor. Once the whole urea solution is dissolved, 250 g of 70% ammonium bisulfite are added very slowly to the above mixture at normal temperature and under stirring conditions.

At the end of the process, a formulation having a solids content of 50%, which comprises vegetable waxes or oils to fulfil the hydrophobant function of the formulation, urea as a formaldehyde scavenger and ammonium bisulfite as a catalyst for the aminoplast resin.

### Example 12: Resistance to water of MDF boards manufactured by use of the formulations of the invention vs. by use of commercial state-of-the-art paraffin suspension

MDF (medium density fibreboard) industrial board was manufactured with the industrial scale suspension of suspension S21, as obtained in Example 5.

It was possible to manufacture MDF with absolute normality for more than three hours of industrial production, isolating around 50 m3 correctly identified manufactured with suspension S21; MDF was cut in line in the size of 4940x2500x2,5 mm; it was a board intended for the manufacture of fruit boxes.

In TABLE 3 below the conditions of work and the quality results are presented comparing the suspension of vegetable waxes against a state of the art suspension of paraffin wax, FORESA WAX 2102, available from the Spanish company FORESA, S.A. (see introduction of Examples for details).

**TABLE 3**

| | | | **Commercial suspension** | **Formulation of example 5 according to the invention** |
|---|---|---|---|---|
| | **Rule** | **Units** | **Paraffin wax suspension** | **vegetable oil / wax suspension** |
| **Thickness** | | mm | 2,6 | 2,49 |
| **Density** | EN 323 | kg/m3 | 891,6 | 879,6 |
| **Internal bond** | | N/mm | 1,35 | 1,55 |
| **Lower Surface soundness** | EN 311 | N/mm | 1,51 | 2,02 |
| **Higher surface soundness** | EN 311 | N/mm | 2,00 | 1,77 |
| **Swelling 24 hours** | EN 317 | % | 40,3 | 39,5 |
| **Absorption 24 hours** | | % | 51,1 | 47,0 |
| **Humidity** | EN 322 | % | 5,5 | 5,3 |
| **Cured factor** | | s/mm | 7,0 | 7,1 |
| **% dry Resin UF / dry wood fiber** | | % | 10 | 10 |
| **Type of emulsion** | | | FORESA WAX 2102 | S21 |
| **% dry emulsion/dry wood fiber** | | % | 1,5 | 1,5 |
| **% dry catalyst/dry wood fiber** | | % | 0,8 | 0,8 |
| **Edges swelling 24 hours** | EN 13329 | | 36,2 | 36,4 |
| **Edges Absorption 24 hours** | EN 13329 | | 28,0 | 22,1 |
| **% Density profile** | | % | 94 | 93,3 |
| **Lower face density** | | kg/m3 | 1017 | 1003 |
| **Upper face density** | | kg/m3 | 1046 | 1037 |
| **Minimum density** | | kg/m3 | 819 | 797 |
| **eucalyptus** | | % | 20 | 20 |
| **pine** | | % | 80 | 80 |

### Example n° 13. Manufacture of MDF boards in a pilot scale industrial plant; comparison of waterproofing capacity, formaldehyde emission and hardening, by use of formulations according to the invention vs. commercial state-of-the-art paraffin emulsions

MDF boards have been manufactured to show the effectiveness of the formulations according to the present invention in comparison with state-of-the-art boards, obtained by using paraffin based emulsions instead of the formulations according to the invention; its hydrophobic capacity, its catalytic capacity of formaldehyde based resins and its properties for scavenging formaldehyde have been tested, in comparison with state of the art boards.

For this purpose, the formulations obtained according to the examples 10 and 11 of the present invention have been used in the manufacture of the boards.

In order to compare the properties of the boards obtained, boards have been manufactured by using a commercial paraffin suspension, FORESA WAX 1102 (see introductory part of the Examples for further details), with the addition of a formaldehyde scavenger and/or a catalyst for curing formaldehyde.

The main working conditions to manufacture the boards in a plate press with dimensions of 500 mm x 500 mm were the following:
- Particleboard quality: E1 according to EN 120.
- Thickness: 16 mm
- Wax suspension: (paraffin based) FORESA WAX 1102 versus (vegetable oil based) formulations of examples 10 and 11, according to the invention.
- Press factor: 9,0 s/mm.
- Temperature of press plates: 200 °C
- Gluing rate: 10 wt% (dry resin / dry wood).
- Hardener SO₄(NH₄)₂: 0 to 2,0 wt % (dry hardener / dry wood).
- Resin used: urea-formaldehyde (UF) resin, without melamine, and molar ratio formaldehyde/NH₂ ranging from 0,5 to 0,55; available to the public from the Spanish company FORESA, S.A., offered under the denomination FORESA RES 1350.
- Urea as formaldehyde scavenger: 0 to 2 wt% (amount of dry urea with respect to dry wood).

In view of the results presented in TABLE 4, it can be concluded that:
The results confirm that the formulations according to the invention of examples 10 and 11 simultaneously manage to improve the hydrophobicity of the boards, catalyze the hardening of the formaldehyde based resins used in the manufacture of said boards, and scavenge free formaldehyde in said wood derived boards. The use of the formulations of examples 10 and 11 results in the obtention of particleboards with a very low content and emission of formaldehyde, in addition to improving the final hydrophobic properties of the boards, in comparison with a commercial resin based on paraffin.

Comparing the results obtained from the boards identified with numbers 1,2,3 and 4 in TABLE 4 (manufactured by using a commercial paraffin based formulation), the data regarding swellings, free formaldehyde content and formaldehyde emission are much worse than the data for the boards obtained with the formulations of the present invention, identified in TABLE 4 with numbers 5, 6, 7 and 8.

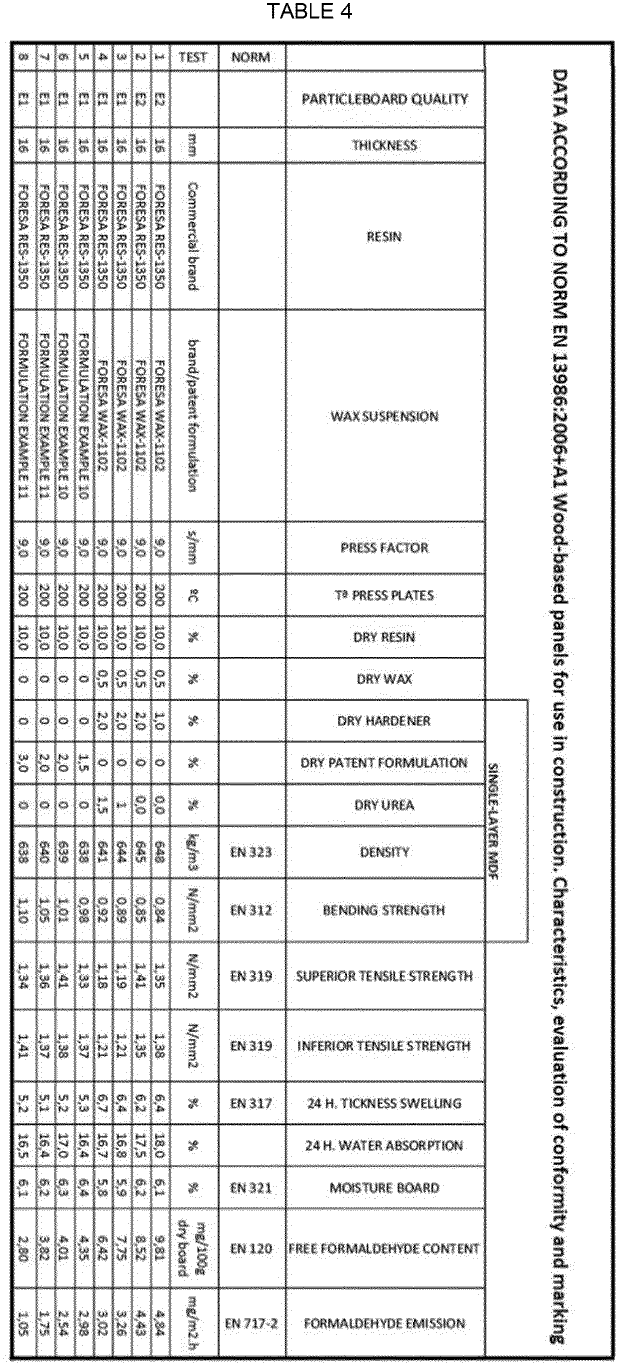

### Example n° 14. Manufacture of agglomerated boards in industrial plant; comparison between formulations according to the invention vs. commercial state-of-the-art paraffin emulsion

In order to verify the industrial scalability of the invention, an industrial test was carried out, manufacturing, at a rate of 60 m₃/hour, in a continuous industrial press.

Agglomerated boards have been manufactured to show the effectiveness of the formulations according to the present invention in comparison with state-of-the-art boards, obtained by using commercial paraffin based emulsions instead of the formulations according to the invention; its hydrophobic capacity, its catalytic capacity of formaldehyde based resins and its properties for scavenging formaldehyde have been tested, in comparison with state of the art boards.

For this purpose, the formulations obtained according to the examples 10 and 11 of the present invention have been used in the manufacture of the boards.

In order to compare the properties of the boards obtained, boards have been manufactured by using a commercial paraffin suspension, FORESA WAX 1102 (see introductory part of the Examples for further details), with the addition of a formaldehyde scavenger and/or a catalyst for curing formaldehyde.

The main working conditions to manufacture the agglomerate board were the following:
- Particleboard quality: E1 according to EN 120 and CARB 2 according to ASTM-13333.
- Thickness: 16 mm
- Wax suspension: (paraffin based) FORESA WAX 1102 versus (vegetable oil based) formulations of examples 10 and 11 according to the invention.
- Press factor: 4,5 s/mm.
- Temperature of press plates: 240 °C
- Gluing rate core layer: 8 wt% (dry resin / dry wood).
- Gluing rate surface layer: 10 wt% (dry resin / dry wood).
- Hardener SO₄(NH₄)₂: 0 to 2,0 wt% (dry hardener / dry wood).
- Used resin: Melamine-urea-formaldehyde resin, an urea-formaldehyde resin containing melamine ranging from 2 to 5 wt% and a molar ratio formaldehyde/NH₂ ranging from 0,5 to 0,55; available to the public from the Spanish company FORESA, S.A., offered under the denomination FORESA RES 2120.
- Urea as formaldehyde scavenger: 0 to 2 wt% (dry urea / dry wood).

The physical-chemical properties of the boards manufactured using the formulations of examples 10 and 11 according to the present invention, show the following:
The lowest values in terms of formaldehyde content and formaldehyde emission are obtained when the formulations of examples 10 and 11 are used, see the data for the boards identified as 3,4,5,6 and 7 in TABLE 5.

These results confirm that the formulations according to the invention of examples 10 and 11 according to the invention, provide agglomerated boards of very low formaldehyde content and formaldehyde emission: formaldehyde below 3,0 mg per 100 g of dry board according to European standard EN 120, and with values close to 1 mg of formaldehyde per m² and hour in the case of the formaldehyde emission test by the European standard EN 717- 2.

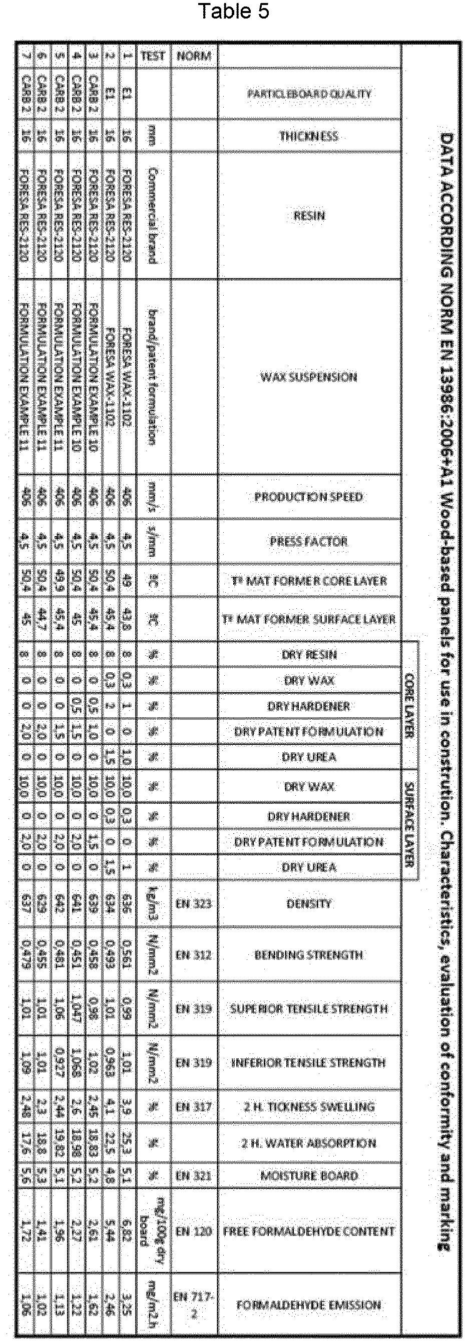

### Example No. 15. Comparison of waterproofing capacity of suspensions having iodine indexes below 10 (state of the art) vs. above 10 (according to the invention)

MDF boards were manufactured to test the hydrophobic efficiency of the formulation of Example No. 5 of the invention, compared to MDF boards manufactured in the same conditions by using an emulsion of a commercial vegetable oil, available under reference AGRI PURE™ AP-635 from Cargill (https://www.cargill.com/bioindustrial/agri-pure-vegetable-waxes), having a iodine value below 10.

The main working conditions for manufacturing the agglomerate board in a plate press with dimensions of 500 mm x 500 mm were the following:
- Particleboard quality: E1 according to EN 120.
- Thickness: 16 mm
- Wax suspension: AGRIPURE AP-635 formulation, versus formulation according to EXAMPLE 5 of the invention.
- Press factor: 9,0 s/mm.
- Press plates temperature: 200 °C
- Gluing rate: 10 wt% (dry resin / dry wood).
- Hardener SO₄(NH₄)₂: 0,4 wt% (dry hardener / dry wood).
- Resin used: Urea-Formaldehyde without melamine, and a molar ratio of Formaldehyde/NH₂ ranging from 0,5 to 0,55; available to the public from the Spanish company FORESA, S.A., offered under the denomination FORESA RES 1350.

In view of the results shown in TABLE 6, it may be concluded that:
The waterproofing capacity of a formulation according to the invention, having a iodine value above 10, i.e., which is kinetically stable (no waxes not emulsified) is much better than the use of hydrogenated vegetable oil emulsions having a iodine index of less than 10.

It seems that the content of soy oil may help to stabilize the suspension of the vegetable waxes, and therefore to increase the waterproofing capacity of the formulation since it improves the distribution in the hydrophilic fibers to which this O / W suspension is applied.

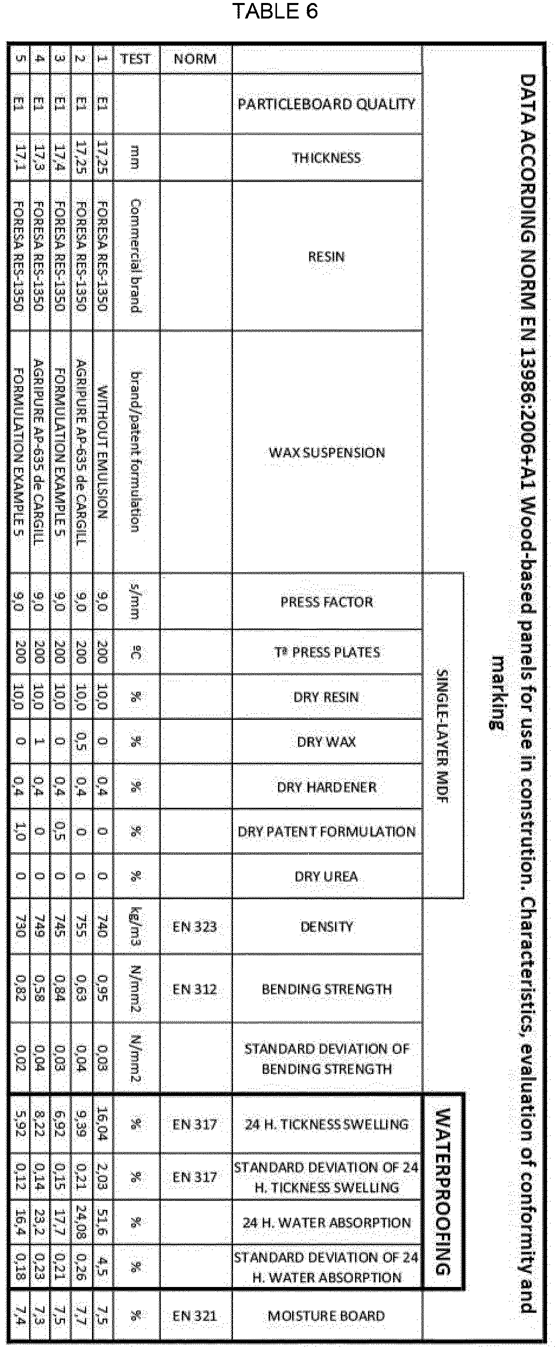

### Ejemplo 16: Comparison of waterproofing capacity of MDF boards manufactured by using a formulation according to the invention vs commercial state-of-the-art synthetic wax emulsions / commercial state-of-the-art paraffin emulsions

MDF boards were manufactured to test the hydrophobic efficiency of the formulation of Example No. 5 of the invention, compared to MDF boards manufactured in the same conditions by using a commercial state-of-the-art synthetic wax emulsion (HYDROWAX® PRO A 18, a liquid synthetic wax blend emulsion, available from SASOL: https://cdn .sasoldigital. com/stagingpic/products/home/grades/E U/5hydrowax-pro-a18/index.html), and a commercial state-of-the-art paraffin emulsion (FORESA WAX 2102, available from the Spanish Company FORESA, S.A.; see introductory part of the Examples for further details).

The main working conditions for manufacturing the agglomerate board in a plate press with dimensions of 500 mm x 500 mm were the following:
- Particleboard quality: E1 according to EN 120.
- Thickness: 16 mm
- Wax suspension: formulation according to EXAMPLE 5 of the invention vs HYDROWAX® PRO A 18 vs. FORESA WAX 2102
- Press factor: 9,0 s/mm.
- Press plates temperature: 200 °C
- Gluing rate: 10 wt% (dry resin / dry wood).
- Hardener SO₄(NH₄)₂: 0,4 wt% (dry hardener / dry wood).
- Resin used: Urea-Formaldehyde without melamine, and a molar ratio of Formaldehyde/NH₂ ranging from 0,5 to 0,55; available to the public from the Spanish company FORESA, S.A., offered under the denomination FORESA RES 1350.

In view of the results shown in TABLE 7, it may be concluded that:

The waterproofing capacity of a formulation according to the invention, based on vegetable oil, is similar or even slightly better than the waterproofing capacity achieved with state-of-the-art paraffin emulsion (FORESA WAX 2102) or state-of-the-art synthetic wax blend emulsion (HYDROWAX® PRO A 18) (see e.g. the data for swelling according to the norm EN317 and water absorption).

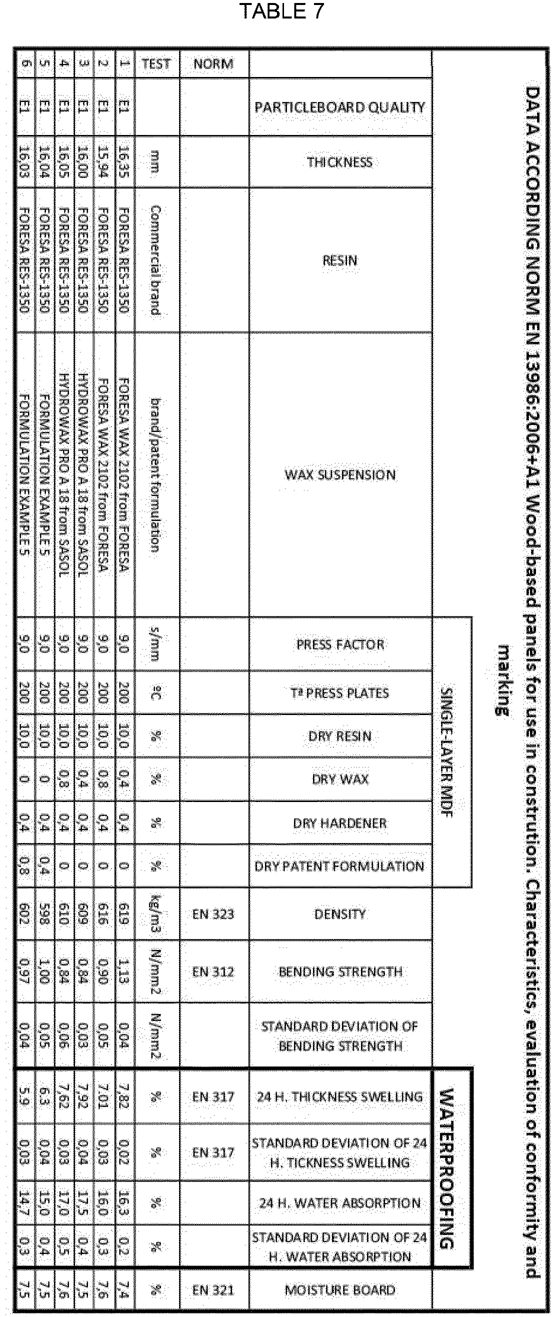

### Example 17. Study of the kinetical stability of the formulation S21 according to the invention, obtained in Example 5, by monitoring its rheological profile during one year.

Formulation S21 according to the invention, obtained in Example 5, having a iodine value above 10 for the total amount of oil, was submitted to a rheological study, along one year.

Samples were taken at different dates (namely, 28/03/2017, 18/04/2017, 09/05/2017, 28/08/2017 and 27/03/2018) and each one was submitted to a measurement of the viscosity at different shear rates and of the Sauter diameter of the oil particles of the emulsion. The data obtained are shown in TABLE 8:

**TABLE 8**

| **DATE** | **Shear rate 1 cps** | **Shear rate 10 cps** | **Shear rate 100 cps** | **Sauter Diameter (microns)** |
|---|---|---|---|---|
| 28/03/2017 | 444 | 111 | 53 | 5,42 |
| 18/04/2017 | 1352 | 293 | 106 | 5,52 |
| 09/05/2017 | 1981 | 321 | 112 | 5,55 |
| 28/08/2017 | 3672 | 928 | 256 | 5,63 |
| 27/03/2018 | 1200 | 261 | 96 | 5,85 |

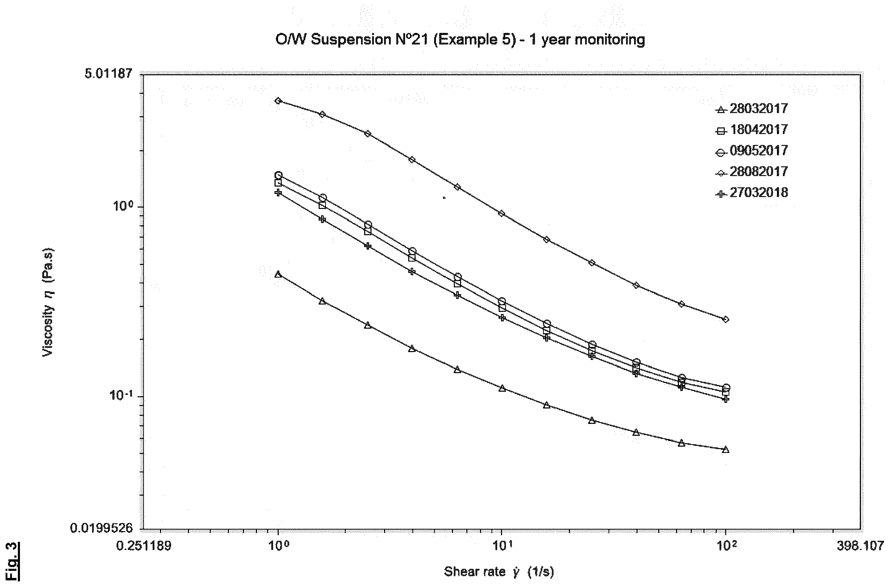

The measured viscosity at different shear rates for each sample is also shown in the graph of Fig. 3 (the different dates are reflected by different shapes).

As can be seen, the Sauter diameter is extremely stable along the time, which is a sign of kinetical stability, i.e., that no phase separation happens nor any solid particles are formed during the time of the testings.

In the case of the viscosity, although for one intermediate sample the viscosity increased, the values returned to normal values at a later stage.

These results show that the formulation according to the invention S21 is kinetically stable.

### Example 18. Study of the kinetical stability of the formulation S8 (comparative example)

Formulation S8 (see TABLE 1 for details), having a iodine value below 10 for the total amount of oil, was submitted to measurements of Sauter diameter 4 weeks.

TABLE 9 reflects the mean Sauter Diameter measured at week 0 (freshly prepared formulation), and weeks 1, 2, 3 and 4.

**TABLE 9**

| | **SAUTER DIAMETER (microns)** |
|---|---|
| WEEK 0 | 6,14 |
| WEEK 1 | 9,41 |
| WEEK 2 | 11,18 |
| WEEK 3 | 11,55 |
| WEEK 4 | 31,19 |

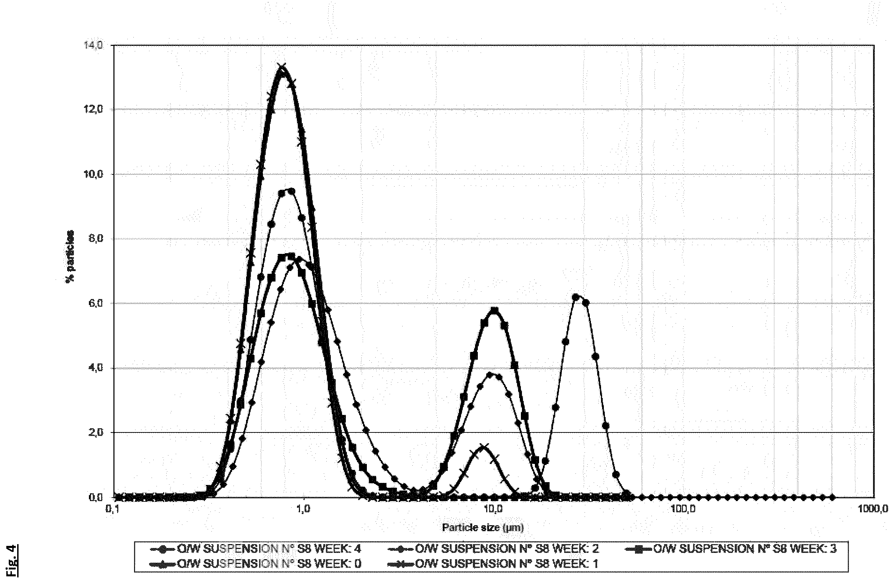

The graph of Fig. 4 reflects the distribution of the Sauter diameter of the particles, at the same points of time (i.e. weeks 0, 1, 2, 3 and 4), for the formulation S8.

## Claims

1. A vegetable oil based formulation, **characterized**
**in that** it is kinetically stable;
**in that** it comprises an oil in water (O/W) suspension, which comprises:
- from 1 wt% to 5 wt% of surfactant, the surfactant being at least one anionic surfactant and at least one non-ionic surfactant; the surfactant being added as such or obtained in situ by addition of between 1 and 3 wt% of an ethanolamine;
- 15 wt% to 50 wt% of hydrogenated or partially hydrogenated palm oil;
- from 0 to 25 wt% of paraffin;
- from 2 to 8 wt% of soy oil, preferably between 4 and 8 wt% soy oil;
and **in that**
- the total amount of oils, being the sum of palm oil, paraffin and soy oil in the O/W suspension does not exceed 55 wt%;
- within the total amount of oils, from 2 to 10 wt% is non hydrogenated oil, and the rest is hydrogenated and/or partially hydrogenated oil;
- the iodine value of the total amount of oils is at least 10 g of iodine per 100 g of total amount of oils;
- the O/W suspension has a solids content of between 30 wt% and 55 wt%, preferably between 45 wt% and 55 wt%, and the rest of the suspension, until reaching 100 wt%, is water, the solids content comprising all the components which are different from water.

2. A vegetable oil based formulation according to claim 1, **characterized in that** it comprises up to 25 wt% of a formaldehyde scavenger, with respect to the total weight of formulation, and/or up to 25 wt% of a catalyst for curing formaldehyde derived resins, with respect to the total weight of formulation.

3. A vegetable oil based formulation according to any one of claims 1 and 2, **characterized in that** the soy oil is non hydrogenated soy oil having a iodine value between 120 and 155 g of iodine per 100 g of soy oil

4. A vegetable oil based formulation according to any one of claims 1 to 3, wherein the O/W suspension contains up to 25 wt% of paraffin, preferably semi refined paraffin.

5. A formulation according to any one of claims 1 to 4, wherein at least 50 wt% of the fatty acids in the total amount of oils are fatty acids having from 20 to 22 carbon atoms.

6. A formulation according to any one of claims 1 to 5, wherein the non-ionic surfactant is selected from secondary alcohol ethoxylate and ethoxylated fatty alcohol.

7. A formulation according to any one of claims 1 to 6, wherein the S/O ratio, that is, the surfactant/total amount of oil ratio in the O/W suspension, is between 4% and 15%.

8. A formulation according to any one of claims 2 to 7, wherein the formaldehyde scavenger is at least one selected from urea, monoethanolamine, and diethanolamine, and the catalyst for curing resins is at least one selected from ammonium bisulfite, ammonium nitrate, and ammonium sulfate.

9. A method for obtaining an O/W suspension as defined in any one of claims 1 to 8, comprising:
- adding a water phase to an oil phase, at least one of them containing an anionic or non-ionic surfactant, in such an amount to obtain a concentration of between about 1 wt% and about 5 wt% in the final emulsion, thus obtaining a W/O emulsion, until the W/O emulsion inverts to an O/W emulsion;
- heating the O/W emulsion to at least 75°C, to obtain a W/O emulsion;
- cool the W/O emulsion to room temperature, to obtain the O/W suspension as defined in any one of claims 1 to 8.

10. Use of a formulation according to any one of claims 1 to 8 in the manufacture of articles selected from wood derived boards, wood composite boards, fibreboards, particleboards, chipboards, plywood, paperboards, oriented strand boards, fibreglass or rock wool insulations, or combinations thereof.

11. Use according to claim 10, wherein the articles are manufactured by using a formaldehyde based resin.

12. Use according to any one of claims 10 or 11, for increasing the hydrophobicity of the manufactured articles.

13. Use according to claim 11, of the formulation according to any one of claims 2 to 8, comprising up to 25 wt% of a formaldehyde scavenger, for reducing the free formaldehyde in the manufactured articles, preferably to 1 mg of formaldehyde per square meter and hour, or below, as measured by gas analysis method UNE-EN ISO 12460-3:2016.

14. Use according to any one of claims 10 to 13, of the formulation according to any one of claims 2 to 8, comprising up to 25 wt% of a catalyst for curing formaldehyde derived resins, for catalysing the hardening of the formaldehyde based resin.

15. Boards, comprising a formulation as defined in any one of claims 2 to 8, comprising up to 25 wt% of a formaldehyde scavenger, having a formaldehyde emission of 1 mg of formaldehyde per square meter and hour, or below, as measured by gas analysis method UNE-EN ISO 12460-3:2016.

16. Fiberglass or rock wool insulations, comprising a formulation as defined in any one of claims 2 to 8, comprising up to 25 wt% of a formaldehyde scavenger, having a formaldehyde emission of 1 mg of formaldehyde per square meter and hour, or below, as measured by gas analysis method UNE-EN ISO 12460-3:2016.

## Patentansprüche

1. Eine Pflanzenöl basierte Formulierung, **dadurch gekennzeichnet,**
**dass** die Formulierung kinetisch stabilisiert ist;
**dass** die Formulierung eine Suspension von Öl in Wasser (O/W) ist, umfassend:
- einen 1 bis 5 prozentigen Tensid Masseanteil, wobei das Tensid zumindest ein anionisches Tensid und zumindest ein nichtionisches Tensid ist; das Tensid wird als solches hinzugefügt oder in situ erhalten, indem 1% und 3% Massenanteile von Ethanolamin hinzugefügt werden;
- einen 15 bis 50 prozentigen Masseanteil von hydrogenisiertem oder teilweise hydrogenisiertem Palmöl;
- einen zwischen 0 und 25 prozentigen Masseanteil von Paraffin;
- einen zwischen 2 und 8 prozentigen Masseanteil von Sojaöl, bevorzugt zwischen 4 und 8 Prozent Masseanteil Sojaöl;
und, **dass**
- die Gesamtmenge der Öle, bestehend aus Palmöl, Paraffin und Sojaöl in der O/W-Suspension 55 Prozent Masseanteil nicht übersteigt;
- innerhalb der Gesamtmenge der Öle, ein Masseanteil von 2 bis 10 Prozent nichthydrogenisiertes Öl und der Rest hydrogenisiertes Öl und/oder teilweise hydrogenisiertes Öl ist;
- der Jodgehalt der Gesamtmenge der Öle mindestens 10g Jod pro 100g der Gesamtmenge der Öle ist;
- die O/W-Suspension einen Festkörpergehalt von zwischen 30 bis 55 Prozent Masseanteil, bevorzugt zwischen 45 und 55 Prozent Masseanteil, hat und der Rest der Suspension, bis zu einem Masseanteil von 100 Prozent, Wasser ist, wobei der Festkörpergehalt alle Komponenten aufweist, die nicht Wasser sind.

2. Pflanzenöl basierte Formulierung nach Anspruch 1, **dadurch gekennzeichnet, dass** diese bis zu 25 Prozent Masseanteil eines Formaldehyd-Fängers in Bezug auf das Gesamtgewicht der Formulierung und/oder bis zu 25 Prozent Masseanteil eines Katalysators zur Härtung eines von Formaldehyd abgeleiteten Harzes in Bezug auf das Gesamtgewicht der Formulierung umfasst.

3. Pflanzenöl basierte Formulierung nach einem der Ansprüche 1 oder 2, **dadurch gekennzeichnet, dass** das Sojaöl nicht hydrogenisiertes Sojaöl mit einem Jodgehalt zwischen 120 und 155g Jod pro 100g Sojaöl ist.

4. Pflanzenöl basierte Formulierung nach einem der Ansprüche 1 bis 3, wobei die O/W Suspension bis zu 25 Prozent Masseanteil Paraffin, bevorzugt halbraffiniertes Paraffin, enthält.

5. Pflanzenöl basierte Formulierung nach einem der Ansprüche 1 bis 5, wobei mindestens 50 Prozent Masseanteil der Fettsäuren von einer Gesamtheit der Öle, Fettsäuren mit zwischen 20 und 22 Kohlenstoffatomen sind.

6. Pflanzenöl basierte Formulierung nach einem der Ansprüche 1 bis 5, wobei das nichtionische Tensid entweder ein sekundäres Alkoholethoxylat oder ein Ethoxylat-Fettalkohol ist.

7. Pflanzenöl basierte Formulierung nach einem der Ansprüche 1 bis 6, wobei das Verhältnis Tensid zur Gesamtölmenge [S/O Verhältnis] in der O/W Suspension zwischen 4% und 15% liegt.

8. Pflanzenöl basierte Formulierung nach einem der Ansprüche 2 bis 7, wobei der Formaldehyd-Fänger wenigstens einer der Stoffe Harnstoff, Monoethanolamin und Diethanolamin und der Katalysator zur Härtung von Harzen wenigstens einer der Stoffe Ammoniumbisulfit, Ammoniumnitrat und Ammoniumsulfat ist.

9. Herstellungsverfahren einer O/W Suspension wie sie in einem der Ansprüche 1 bis 8 definiert ist, umfassend:
- Hinzufügen einer Wasser Phase zu einer Öl Phase, wobei wenigstens eine der beiden Phasen ein anionisches oder nichtionisches Tensid enthält, bis zu einer solchen Menge, sodass man eine Konzentration zwischen ungefähr 1 Prozent Masseanteil und 5 Prozent Masseanteil in der endgültigen Emulsion erhält, wobei man zunächst eine W/O Emulsion erhält, bis die W/O Emulsion in eine O/W Emulsion umschlägt;
- Erhitzen der O/W Emulsion bis mindestens 75°C, um eine W/O Emulsion zu erhalten;
- Kühlen der der W/O Emulsion auf Raumtemperatur, um eine O/W Suspension, wie in einem der Ansprüche 1 bis 8 definiert, zu erhalten.

10. Verwendung einer Formulierung nach einem der Ansprüche 1 bis 8 bei der Herstellung von Produkten, wie auf Holz basierte Platten, Holzverbundplatten, Faserplatten, Flachpressplatten, Spanplatten Sperrholz, Pappen, Grobspanplatten, Glasfaser- oder Steinwollisolierungen, oder Kombinationen derselben.

11. Verwendung nach Anspruch 10, wobei die Produkte unter Verwendung eines Formaldehyd basierten Harzes hergestellt sind.

12. Verwendung nach einem der Ansprüche 10 oder 11 zur Erhöhung der Hydrophobizität der hergestellten Produkte.

13. Verwendung nach Anspruch 11 der Formulierung nach einem der Ansprüche 2 bis 8, umfassend bis zu 25 Prozent Masseanteil eines Formaldehyd-Fängers zur Reduktion des freien Formaldehyds in den hergestellten Produkten, bevorzugt auf 1 mg Formaldehyd pro Quadratmeter und Stunde, oder weniger, gemessen gemäß der Gasanalysemethode UNE-EN ISO 12460-3:2016.

14. Verwendung nach einem der Ansprüche 10 bis 13 der Formulierung nach einem der Ansprüche 2 bis 8, umfassend einen Katalysator zum Härten eines von Formaldehyd abgeleiteten Harzes zur Katalysierung der Härtung des von Formaldehyd basierten Harzes.

15. Platten, umfassend eine Formulierung, wie sie in einem der Ansprüche 2 bis 8 definiert ist, umfassend bis zu 25 Prozent Masseanteil eines Formaldehyd-Fängers, mit einer Formaldehyd Emission von 1 mg Formaldehyd pro Quadratmeter und Stunde, oder weniger, gemessen gemäß der Gasanalysemethode UNE-EN ISO 12460-3:2016.

16. Glasfaser- oder Steinwollisolierungen, wie sie in einem der Ansprüche 2 bis 8 definiert ist, umfassend bis zu 25 Prozent Masseanteil eines Formaldehyd-Fängers, mit einer Formaldehyd Emission von 1 mg Formaldehyd pro Quadratmeter und Stunde, oder weniger, gemessen gemäß der Gasanalysemethode UNE-EN ISO 12460-3:2016.

## Revendications

1. Formulation à base d'huile végétale, **caractérisée**
**en ce qu'**elle est cinétiquement stable ;
**en ce qu'**elle comprend une suspension huile dans l'eau (H/E), qui comprend :
- de 1 % en poids à 5 % en poids de tensioactif, le tensioactif étant au moins un tensioactif anionique et au moins un tensioactif non-ionique ; le tensioactif étant ajouté tel quel ou obtenu in situ par addition d'entre 1 et 3 % en poids d'une éthanolamine ;
- de 15 % en poids à 50 % en poids d'huile de palme hydrogénée ou partiellement hydrogénée ;
- de 0 à 25 % en poids de paraffine ;
- de 2 à 8 % en poids d'huile de soja, de préférence entre 4 et 8 % en poids d'huile de soja ;
et **en ce que**
- la quantité totale d'huiles, qui est la somme de l'huile de palme, de la paraffine et de l'huile de soja dans la suspension H/E, ne dépasse pas 55 % en poids ;
- dans la quantité totale d'huile, de 2 à 10 % en poids sont de l'huile non hydrogénée, et le reste est de l"huile hydrogénée et/ou partiellement hydrogénée ;
- l'indice d'iode de la quantité totale d'huiles est d'au moins 10 g d'iode pour 100 g de la quantité totale d'huiles ;
- la suspension H/E a une teneur en solides comprise entre 30 % en poids et 55 % en poids, de préférence entre 45 % en poids et 55 % en poids, et le reste de la suspension, jusqu'à atteindre 100 % en poids, est de l'eau, la teneur en solides comprenant tous les composants qui sont différents de l'eau.

2. Formulation à base d'huile végétale selon la revendication 1, **caractérisée en ce qu'**elle comprend jusqu'à 25 % en poids d'un piégeur de formaldéhyde, par rapport au poids total de la formulation, et/ou jusqu'à 25 % en poids d'un catalyseur pour durcir des résines dérivées de formaldéhyde, par rapport au poids total de la formulation.

3. Formulation à base d'huile végétale selon l'une quelconque des revendications 1 et 2, **caractérisée en ce que** l'huile de soja est une huile de soja non hydrogénée ayant un indice d'iode compris entre 120 et 155 g d'iode pour 100 g d'huile de soja.

4. Formulation à base d'huile végétale selon l'une quelconque des revendications 1 à 3, dans laquelle la suspension H/E contient jusqu'à 25 % en poids de paraffine, de préférence de paraffine semi-raffinée.

5. Formulation à base d'huile végétale selon l'une quelconque des revendications 1 à 4, dans laquelle au moins 50 % en poids des acides gras dans la quantité totale des huiles sont des acides gras ayant de 20 à 22 atomes de carbone.

6. Formulation à base d'huile végétale selon l'une quelconque des revendications 1 à 5, dans laquelle le tensioactif non-ionique est choisi parmi un alcool secondaire éthoxylé et un alcool gras éthoxylé.

7. Formulation à base d'huile végétale selon l'une quelconque des revendications 1 à 6, dans laquelle le rapport S/O, à savoir le rapport tensioactif/quantité totale d'huile dans la suspension H/E, est compris entre 4 % et 15 %.

8. Formulation à base d'huile végétale selon l'une quelconque des revendications 2 à 7, dans laquelle le piégeur de formaldéhyde est au moins l'un choisi parmi l'urée, la monoéthanolamine, et la diéthanolamine, et le catalyseur pour durcir des résines est au moins l'un choisi parmi le bisulfite d'ammonium, le nitrate d'ammonium, et le sulfate d'ammonium.

9. Méthode pour obtenir une suspension H/E telle que définie dans l'une quelconque des revendications 1 à 8, comprenant :
- l'addition d'une phase aqueuse à une phase huileuse, au moins l'une d'elles contenant un tensioactif anionique ou non-ionique, en une quantité telle que soit obtenue une concentration comprise entre environ 1 % en poids et environ 5 % en poids dans l'émulsion finale, ce qui donne ainsi une émulsion E/H, jusqu'à ce que l'émulsion E/H s'inverse en une émulsion H/E ;
- le chauffage de l'émulsion H/E à au moins 75 °C pour que soit obtenue une émulsion E/H ;
- le retour de l'émulsion E/H à la température ambiante, pour que soit obtenue la suspension H/E telle que définie dans l'une quelconque des revendications 1 à 8.

10. Utilisation d'une formulation selon l'une quelconque des revendications 1 à 8 dans la fabrication d'articles choisis parmi les panneaux dérivés de bois, les panneaux composites de bois, les panneaux de fibres, les panneaux d'aggloméré, les panneaux de particules, le contreplaqué, le carton, les panneaux à copeaux orientés, les isolants en fibres de verre ou en laine de roche, et leurs combinaisons.

11. Utilisation selon la revendication 10, dans laquelle les articles sont fabriqués par utilisation d'une résine à base de formaldéhyde.

12. Utilisation selon l'une quelconque des revendications 10 ou 11, pour augmenter le caractère hydrophobe des articles manufacturés.

13. Utilisation selon la revendication 11 de la formulation de l'une quelconque des revendications 2 à 8, comprenant jusqu'à 25 % en poids d'un piégeur de formaldéhyde, pour réduire le formaldéhyde libre dans les articles manufacturés, de préférence à 1 mg de formaldéhyde par mètre carré et par heure, ou moins, tel que mesuré par la méthode d'analyse gazeuse UNE-EN ISO 12460-3:2016.

14. Utilisation selon l'une quelconque des revendications 10 à 13, ou formulation selon l'une quelconque des revendications 2 à 8, comprenant jusqu'à 25 % en poids d'un catalyseur pour durcir des résines dérivées de formaldéhyde, pour catalyser le durcissement de la résine à base de formaldéhyde.

15. Panneaux, comprenant une formulation telle que définie dans l'une quelconque des revendications 2 à 8, comprenant jusqu'à 25 % en poids d'un piégeur de formaldéhyde, ayant une émission de formaldéhyde de 1 mg de formaldéhyde par mètre carré et par heure, ou moins, telle que mesurée par la méthode d'analyse gazeuse UNE-EN ISO 12460-3:2016.

16. Isolants en fibres de verre ou en laine de roche, comprenant une formulation telle que définie dans l'une quelconque des revendications 2 à 8, comprenant jusqu'à 25 % en poids d'un piégeur de formaldéhyde, ayant une émission de formaldéhyde de 1 mg de formaldéhyde par mètre carré et par heure, ou moins, telle que mesurée par la méthode d'analyse gazeuse UNE-EN ISO 12460-3:2016.
